(19) Europäisches Patentamt / European Patent Office / Office européen des brevets

(11) **EP 4 285 435 B1**

(12) **EUROPÄISCHE PATENTSCHRIFT**

(45) Veröffentlichungstag und Bekanntmachung des Hinweises auf die Patenterteilung:
**26.03.2025 Patentblatt 2025/13**

(21) Anmeldenummer: **22708755.8**

(22) Anmeldetag: **27.01.2022**

(51) Internationale Patentklassifikation (IPC):
*H01M 50/429* $^{(2021.01)}$  *H01M 50/403* $^{(2021.01)}$
*H01M 50/446* $^{(2021.01)}$  *H01M 50/489* $^{(2021.01)}$
*H01M 50/491* $^{(2021.01)}$  *H01M 50/494* $^{(2021.01)}$

(52) Gemeinsame Patentklassifikation (CPC):
H01M 50/4295; H01M 50/403; H01M 50/446; H01M 50/489; H01M 50/491; H01M 50/494

(86) Internationale Anmeldenummer:
**PCT/EP2022/051841**

(87) Internationale Veröffentlichungsnummer:
**WO 2022/162039 (04.08.2022 Gazette 2022/31)**

(54) **DIMENSIONSSTABILER SEPARATOR FÜR ELEKTROCHEMISCHE ELEMENTE**

DIMENSIONALLY STABLE SEPARATOR FOR ELECTROCHEMICAL ELEMENTS

SÉPARATEUR À STABILITÉ DIMENSIONNELLE POUR ÉLÉMENTS ÉLECTROCHIMIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.01.2021 DE 102021102055**

(43) Veröffentlichungstag der Anmeldung:
**06.12.2023 Patentblatt 2023/49**

(73) Patentinhaber: **delfortgroup AG**
**4050 Traun (AT)**

(72) Erfinder:
• **PLAPPERT, Sven**
**6130 Schwaz (AT)**
• **VOLGGER, Dietmar**
**6069 Gnadenwald (AT)**

(74) Vertreter: **Gille Hrabal Partnerschaftsgesellschaft mbB**
**Patentanwälte**
**Brucknerstraße 20**
**40593 Düsseldorf (DE)**

(56) Entgegenhaltungen:
US-A1- 2017 373 294

• LIZUNDIA ERLANTZ ET AL: "Cellulose and its derivatives for lithium ion battery separators: A review on the processing methods and properties", CARBOHYDRATE POLYMER TECHNOLOGIES AND APPLICATIONS, vol. 1, 1 December 2020 (2020-12-01), pages 100001, XP055919295, ISSN: 2666-8939, DOI: 10.1016/j.carpta.2020.100001
• WANG YI ET AL: "Wet-laid non-woven fabric for separator of lithium-ion battery", JOURNAL OF POWER SOURCES, vol. 189, no. 1, 1 April 2009 (2009-04-01), pages 616 - 619, XP055109961, ISSN: 0378-7753, DOI: 10.1016/j.jpowsour.2008.09.078

**Beschreibung**

GEBIET DER ERFINDUNG

Die Erfindung betrifft einen Separator für elektrochemische Elemente, der im Wesentlichen durch Cellulosefasern gebildet wird und der durch einen besonderen Herstellungsprozess eine hohe Dimensionsstabilität erhält.

HINTERGRUND UND STAND DER TECHNIK

Ein elektrochemisches Element umfasst typischerweise mindestens eine positive Elektrode, eine negative Elektrode, einen Elektrolyten, einen Separator, ein Gehäuse und Stromabnehmer. Der Separator ist mit dem Elektrolyten getränkt und hat die Aufgabe die beiden Elektroden elektrisch zu trennen. Dabei soll er aber auch einen möglichst ungehinderten Fluss von Ionen zwischen den Elektroden erlauben, damit das elektrochemische Element günstige Eigenschaften hat, insbesondere rasches Laden und die Möglichkeit der Entnahme hoher Stromstärken.

Diese Anforderungen an den Separator bedeuten, dass er möglichst dünn sein soll, damit der Weg der Ionen von einer Elektrode zur anderen durch die Poren des Separators kurz ist und eine hohe volumetrische Energiedichte des elektrochemischen Elements erreicht wird, und dass er eine hohe Porosität besitzen soll. Insbesondere wenn es sich bei dem elektrochemischen Element um einen Akkumulator handelt, soll die Porosität nicht durch wenige große Poren sondern durch eine Vielzahl kleiner Poren gebildet werden, weil kleine Poren das Wachstum von Kristallen, insbesondere von Dendriten, an den Elektroden hemmen. Diese Kristalle können den Akkumulator kurzschließen und damit seine Lebensdauer und Leistung reduzieren. Zudem soll die Porosität über die gesamte Fläche des Separators möglichst konstant sein.

Der Separator soll chemisch beständig gegenüber dem Elektrolyten sein, da elektrochemische Elemente mehrfach wieder aufgeladen werden können und üblicherweise mehrere Jahre im Einsatz sind. Der Separator muss daher auch in oxidativen und reduktiven Umgebungen beständig sein.

Aus Sicherheitsgründen soll der Separator eine gute thermische Stabilität besitzen, um bei Beschädigung des elektrochemischen Elements die Brandgefahr zu begrenzen.

Allerdings tritt bei der Herstellung von elektrochemischen Elementen mitunter das Problem auf, dass ihre Leistungsparameter schwanken, was auf schwankende Qualität des Separators zurückzuführen ist.

Es besteht daher ein Interesse, einen Separator zur Verfügung zu haben, der es gestattet, elektrochemische Elemente hoher und gleichbleibender Qualität herzustellen.

ZUSAMMENFASSUNG DER ERFINDUNG

Der Erfindung liegt daher die Aufgabe zugrunde, einen Separator für elektrochemische Elemente zur Verfügung zu stellen, der es gestattet, daraus mit hoher Produktivität elektrochemische Elemente mit guten Leistungsparametern herzustellen.

Diese Aufgabe wird durch einen Separator für elektrochemische Elemente nach Anspruch 1, ein elektrochemisches Element umfassend diesen Separator nach Anspruch 40 und ein Verfahren zur Herstellung eines Separators für elektrochemische Elemente nach Anspruch 41 gelöst. Vorteilhafte Weiterbildungen sind in den abhängigen Ansprüchen angegeben.

Die Erfinder haben festgestellt, dass Schwankungen in dem Leistungsverhalten von elektrochemischen Elementen in der Praxis nicht nur durch Schwankungen im Herstellungsverfahren verursacht werden, sondern insbesondere durch mechanische Beanspruchungen des Separators im Herstellungsverfahren eines solchen elektrochemischen Elementes. In diesem Zusammenhang ist nicht nur die Bruchlast des Separators von Bedeutung, sondern wesentlich ist, dass der Separator dimensionsstabil ist, d. h. dass sich der Separator unter den bei der Herstellung des elektrochemischen Elements auftretenden Belastungen nicht plastisch, also irreversibel, verformt. Solche plastischen Verformungen können die Porenstruktur des Separators ungünstig verändern und zu schlechteren Leistungsparametern des elektrochemischen Elements führen oder den Ausschuss bei der Produktion elektrochemischer Elemente erhöhen.

Die Erfinder haben gefunden, dass sich die genannte Aufgabe durch einen Separator für elektrochemische Elemente lösen lässt, bei dem mindestens 50% der Masse durch fibrillierte Fasern regenerierter Cellulose gebildet werden und bei dem einschließlich der fibrillierten Fasern regenerierter Cellulose mindestens 70% und höchstens 100% der Masse des Separators durch Cellulosefasern gebildet werden, wobei der Separator ferner kalandriert ist und unter Zugbelastung in Maschinenrichtung nach ISO 1924-2:2008 seine 0,1%-Fließgrenze bei einer Dehnung von nicht weniger als 0,5% und nicht mehr als 2,0% erreicht.

Dabei ist die Tatsache, dass die 0,1%-Fließgrenze erst bei einer Dehnung von 0,5 % oder darüber erreicht wird, ein Maß für die genannte Dimensionsstabilität, die für die Lösung der Aufgabe als wesentlich erkannt wurde.

Gemäß den Erkenntnissen der Erfinder gestatten es die fibrillierten Fasern regenerierter Cellulose, den Separator mit einer homogenen Porenstruktur und hohen Porosität auszustatten. Im Unterschied zu Zellstofffasern sind die fibrillierten Fasern regenerierter Cellulose hinsichtlich ihrer Geometrie weniger variabel und erzeugen somit eine homogene Porenstruktur, tragen aber weniger zur Festigkeit bei als Zellstofffasern. Die chemische Reinheit ist ein weiterer Vorteil fibrillierter Fasern regenerierter Cellulose gegenüber Zellstofffasern.

Obwohl nach Verständnis der Erfinder vorteilhafte Separatoren bereits mit einem Anteil von 50 % an fibrillierten Fasern regenerierter Cellulose erhalten werden können, sollte der Gesamtanteil an Cellulosefasern, d. h. inklusive der Fasern regenerierter Cellulose, mindestens 70 % betragen, jeweils bezogen auf die Masse des Separators, um den Separator mit einer geeigneten mechanischen Festigkeit auszustatten. Zudem bieten die Cellulosefasern gegenüber Kunststofffolien Vorteile bezüglich der Brandsicherheit, der thermischen Stabilität und ökologischen Aspekten.

Ein Separator aus diesen Bestandteilen kann grundsätzlich mittels den aus dem Stand der Technik bekannten Verfahren der Papierherstellung erzeugt werden, weist aber ohne auf die Erzielung der Dimensionsstabilität abgestimmte Maßnahmen bei der Herstellung nicht die gewünschten Eigenschaften auf. Wenn man aus dem Stand der Technik bekannte Separatoren in einem Zugversuch dehnt, dann sind die Verformungen zunächst linear elastisch. Das bedeutet, dass die Verformungen proportional zur aufgewendeten Kraft sind und nach Entlastung wieder vollständig zurückgehen. Bei weiterer Dehnung im Zugversuch kommt es in einem kleinen Übergangsbereich zu nichtlinear elastischer Verformung, bei der also die aufgewendete Kraft nicht mehr proportional der Dehnung ist, aber die Verformung nach Entlastung noch immer vollständig zurückgeht. Bei noch höherer Dehnung kommt es dann zu einer plastischen Verformung, also einer irreversiblen Verformung, die auch nach Entlastung nicht mehr verschwindet. Eine solche irreversible Verformung ist unerwünscht, weil sie die Porenstruktur des Separators ungünstig verändert und mikroskopische Risse erzeugen kann und damit die Eigenschaften eines daraus hergestellten elektrochemischen Elements verschlechtert. Außerdem kann sich der Ausschuss bei der Herstellung eines elektrochemischen Elements erhöhen.

Bei der Herstellung eines elektrochemischen Elements können aber durchaus Belastungen auftreten, bei denen irreversible Verformungen im Separator zurückbleiben. Das kann beispielsweise dadurch geschehen, dass der Separator während der Herstellung des elektrochemischen Elements, beispielsweise bei der Herstellung zylindrischer Zellen, Stößen, hohen Beschleunigungen oder Geschwindigkeitsdifferenzen ausgesetzt wird. Da irreversible Verformungen bei Lasten bereits weit unterhalb der Bruchlast des Separators auftreten, bleiben sie üblicherweise unbemerkt, verschlechtern aber in der Regel die Eigenschaften des elektrochemischen Elements.

Das elastische und plastische Verhalten von Separatoren kann in einem Zugversuch beurteilt werden. Ein solcher Zugversuch kann nach ISO 1924-2:2008 durchgeführt werden. Dabei wird ein 15 mm breiter Probestreifen mit einer konstanten Geschwindigkeit von 20 mm/min bis zum Bruch gedehnt. Während des Dehnungsvorgangs werden die Dehnung und die Kraft aufgezeichnet und daraus ein Spannungs-Dehnungs-Diagramm berechnet.

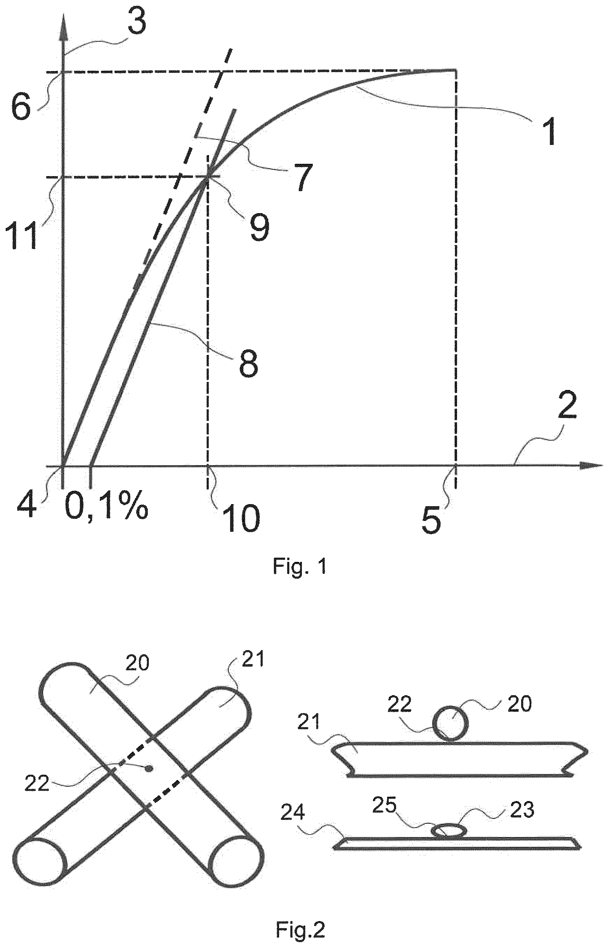

Fig 1. zeigt ein beispielhaftes Spannungs-Dehnungs-Diagramm eines erfindungsgemäßen Separators. Die Spannungs-Dehnungs-Kurve 1 ist dabei in einem Diagramm aufgetragen, wobei die horizontale Achse 2 die Dehnung zeigt und die vertikale Achse 3 die Zugspannung. Ausgehend von einem nahezu spannungs- und dehnungslosen Zustand 4 wird die Dehnung mit einer konstanten Rate von 20 mm/min erhöht, bis der Probestreifen bei der Dehnung 5 und der zugehörigen Zugspannung 6 reißt. Anfänglich kommt es dabei zu einer linear elastischen Verformung, angedeutet durch die strichlierte Linie 7. Die Steigung dieser Linie 7 ist der Elastizitätsmodul, der ebenfalls aus dem Zugversuch nach ISO 1924-2:2008 bestimmt werden kann. Es ist üblich, aus der Spannungs-Dehnungs-Kurve 1 sowie der Linie des linear elastischen Verhaltens 7 die 0,1%-Fließgrenze zu bestimmen. Dabei verschiebt man die Linie 7 entlang der horizontalen Achse 2 parallel, bis sie die horizontale Achse 2 bei einer Dehnung von 0,1% schneidet, und erhält so eine Linie 8. Der Schnittpunkt 9 dieser verschobenen Linie 8 mit der Spannungs-Dehnungs-Kurve 1 zeigt die 0,1%-Fließgrenze, die durch die entsprechende Dehnung 10 und die Zugspannung 11 charakterisiert ist. Man geht üblicherweise davon aus, dass bei Dehnungen über den Schnittpunkt 9 hinaus bereits irreversible Verformungen vorliegen, während bei Dehnungen darunter noch weitgehend elastisches Verhalten vorliegt.

Unter der 0,1%-Fließgrenze wird daher im Sinne dieser Erfindung immer der wie oben beschriebene Punkt 9 bestehend aus der entsprechenden Dehnung 10 und Zugspannung 11 verstanden. Geräte zur Prüfung der Zugfestigkeit nach ISO 1924-2:2008 sind oft in der Lage die 0,1%-Fließgrenze automatisch zu ermitteln.

Die Zugspannung ergibt sich als Kraft pro Fläche (MPa), bezogen auf die Querschnittsfläche, sie kann aber auch mit der Dicke des Separators multipliziert werden, sodass sie nur auf die Breite bezogen ist und dann in kN/m angegeben wird.

Für die Herstellung eines elektrochemischen Elements aus einem Separator sind vor allem seine mechanischen Eigenschaften in Maschinenrichtung von Bedeutung. Die Maschinenrichtung ist dabei jene Richtung, in der die Faserbahn bei der Herstellung des Separators durch die Maschine läuft. Die dazu orthogonale in der Ebene der Faserbahn liegende Richtung ist die Querrichtung.

Nach den Erkenntnissen der Erfinder kommt es daher darauf an, dass die 0,1%-Fließgrenze des erfindungsgemäßen Separators in Maschinenrichtung bei hohen Spannungen und Dehnungen liegt. Ein solcher Separator ist in der Lage viel Verformungsenergie aufzunehmen, ohne dass es zu irreversiblen Verformungen kommt. Er besitzt also ein hohes elastisches Energieaufnahmevermögen und damit eine hohe Dimensionsstabilität. Das elastische Energieaufnahmevermögen ergibt sich dabei gemäß Fig. 1 durch jene Fläche, die von der Spannungs-Dehnungs-Kurve 1, der horizontalen Achse 2 und der die Punkte 9 und 10 verbindenden Linie begrenzt wird. In guter Näherung kann das elastische Energieaufnahmevermögen auch durch die Fläche des Dreiecks berechnet werden, das durch die Punkte 4, 9 und 10 gebildet wird.

Das elastische Energieaufnahmevermögen ist eine volumetrische Größe und besitzt daher die Einheit Energie pro Volumen ($kJ/m^3$). In der praktischen Anwendung bei Separatoren wird sie aber fallweise mit der Dicke des Separators multipliziert, sodass sie als Energie pro Fläche des Separators in $J/m^2$ angegeben werden kann.

Das elastische Energieaufnahmevermögen ist dabei vom gesamten Energieaufnahmevermögen ("tensile energy absorption", TEA) zu unterscheiden, weil letzteres die gesamte bis zum Bruch aufgenommene Verformungsenergie beschreibt und nicht nur jene, die bis zum Eintreten irreversibler Verformungen aufgenommen werden kann.

Die fibrillierten Fasern regenerierter Cellulose sind im erfindungsgemäßen Separator wesentlich, um eine günstige Porenstruktur zu erzeugen. Die Fibrillierung der Fasern regenerierter Cellulose vergrößert ihre Oberfläche und damit die Fläche, die für Wasserstoffbrückenbindungen zur Verfügung steht. Durch ihren runden Querschnitt weisen sie aber trotzdem noch einige Nachteile bezüglich der mechanischen Festigkeit auf, die durch geeignete Verfahren zur Herstellung überwunden werden können, sodass die 0,1%-Fließgrenze des Separators zu höheren Dehnungen und Spannungen verschoben werden kann.

Fig. 2 zeigt zwei fibrillierte Fasern regenerierter Cellulose, 20 und 21, die sich überkreuzen. Durch den runden Querschnitt der fibrillierten Fasern regenerierter Cellulose 20 und 21 berühren sie sich theoretisch nur an einem Punkt 22. An der kleinen Fläche 22 können sich nur wenige Wasserstoffbrückenbindungen ausbilden, wodurch die Festigkeit und entsprechend die 0,1%-Fließgrenze eines so erzeugten Separators ungünstig sind. Durch Kalandrieren können die fibrillierten Fasern regenerierter Cellulose 20 und 21 flachgedrückt werden, sodass die Fasern 23 und 24 erhalten werden. Dadurch entsteht eine größere Kontaktfläche 25, die mehr Wasserstoffbrückenbindungen erlaubt und so zu einer höheren Festigkeit und besseren 0,1%-Fließgrenze führt.

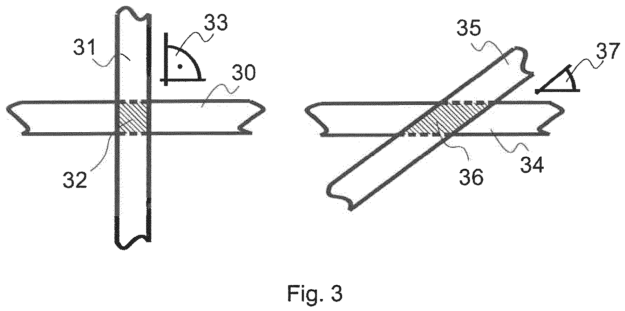

Es kommt für die Zwecke der verbesserten Dimensionsstabilität nach Verständnis der Erfinder aber nicht nur auf die Veränderung des Faserquerschnitts an. Fig. 3 zeigt zwei Cellulosefasern, 30 und 31, die sich näherungsweise in einem rechten Winkel 33 überkreuzen. Selbst wenn die Cellulosefasern 30 und 31 flachgedrückt sind, ist die Kontaktfläche 32 relativ klein. Die Cellulosefasern 34 und 35 hingegen kreuzen sich in einem kleineren Winkel 37, wodurch eine wesentlich größere Kontaktfläche 36 zwischen den Fasern entsteht und sich die Festigkeit und die 0,1%-Fließgrenze verbessern. Die Verbesserung tritt vor allem in Richtung der Längsachsen der Cellulosefasern 34 und 35 auf, während in den dazu orthogonalen Richtungen die Verbesserung deutlich geringer ist oder sogar eine Verschlechterung eintritt. Der Winkel 37 zwischen den Cellulosefasern sollte also nicht beliebig klein werden. Wie unten näher erläutert wird, ist es möglich, durch Einstellungen am Herstellungsprozess, insbesondere der Bahnspannung, Temperatur und Feuchtigkeit, die Cellulosefasern zu strecken und möglicherweise auch plastisch zu verformen, und im Mittel so in einem Winkel zu orientieren, dass die 0,1%-Fließgrenze deutlich zu höheren Spannungen und Dehnungen verschoben werden kann.

Ein erfindungsgemäßer faserbasierter Separator, der es gestattet mit hoher Produktivität elektrochemische Elemente mit guten Leistungsparametern herzustellen, zeichnet sich also insbesondere durch eine verbesserte Dimensionsstabilität aus, die sich quantitativ dadurch beschreiben lässt, dass der Separator unter Zugbelastung in Maschinenrichtung nach ISO 1924-2:2008 seine 0,1%-Fließgrenze erst bei einer Dehnung von 0,5% oder darüber erreicht.

Die Erfinder konnten zeigen, dass ein derart dimensionsstabiler faserbasierter Separator aus den genannten Bestandteilen hergestellt werden kann, wenn der Herstellungsprozess entsprechend angepasst wird. Der Einfluss bestimmter Einstellungen im Herstellungsprozess, die sich positiv auf die Dimensionsstabilität der Faserbahn auswirken, insbesondere der Einfluss von Bahnspannung, Temperatur und Feuchtigkeit, wird unten näher erläutert und in Experimenten nachgewiesen, und diese Maßnahmen orientieren sich an dem theoretischen Verständnis der Erfinder, das unter Bezug auf Fig. 2 dargelegt wurde. Es wird aber betont, dass die Erfindung nicht auf diese speziellen Maßnahmen in der Herstellung beschränkt ist, und dass auch andere Modifikationen am Herstellungsprozess durch die Erfindung umfasst sind, sofern sie zu der erfindungsgemäßen 0,1%-Fließgrenze des Separators führen. Ebenso wenig soll aus der theoretischen Erklärung unter Bezugnahme auf Fig. 2, die dem derzeitigen Verständnis der Erfinder entspricht, irgendeine Beschränkung der Erfindung abgeleitet werden.

Der erfindungsgemäße Separator wird zu mindestens 50% seiner Masse durch fibrillierte Fasern regenerierter Cellulose gebildet. Diese Fasern erzeugen eine für einen Separator günstige Porenstruktur. Bevorzugt ist der Anteil an fibrillierten Fasern regenerierter Cellulose aber höher und beträgt mindestens 55% und höchstens 100% und besonders bevorzugt mindestens 60% und höchstens 95% der Masse des Separators.

Die fibrillierten Fasern regenerierter Cellulose sind bevorzugt in einem Lösungsmittel gesponnene Fasern ("*solvent-spun*") regenerierter Cellulose, besonders bevorzugt Lyocell® Fasern.

Die lineare Dichte der fibrillierten Fasern regenerierter Cellulose vor dem Fibrillieren ist für das Fibrillieren der Fasern von Bedeutung. Bevorzugt beträgt die mittlere lineare Dichte der fibrillierten Fasern regenerierter Cellulose vor dem Fibrillieren mindestens 0,8 g/10000 m (0,8 dtex) und höchstens 3,0 g/10000 m (3,0 dtex) und besonders bevorzugt mindestens 1,0 g/10000 m (1,0 dtex) und höchstens 2,5 g/10000 m (2,5 dtex).

Die Länge der fibrillierten Fasern regenerierter Cellulose vor dem Fibrillieren ist vor allem für die Festigkeit des Separators wichtig, wobei längere Fasern zu einer höheren Festigkeit führen aber auch mehr Energieaufwand beim Fibrillieren bedeuten. Bevorzugt beträgt die mittlere Länge der fibrillierten Fasern regenerierter Cellulose vor dem Fibrillieren mindestens 2 mm und höchstens 8 mm und besonders bevorzugt mindestens 3 mm und höchstens 6 mm.

Einschließlich der fibrillierten Fasern regenerierter Cellulose wird der erfindungsgemäße Separator zu mindestens 70% und höchstens 100% seiner Masse durch Cellulosefasern gebildet. Bevorzugt beträgt der Anteil an Cellulosefasern mindestens 75% und höchstens 95% bezogen auf die Masse des Separators. Diese Art und die Menge der Fasern im Separator erlauben es, eine gute Festigkeit zu erreichen, sodass der Separator auch zu einem elektrochemischen Element verarbeitet werden kann.

Ergänzend zu den fibrillierten Fasern regenerierter Cellulose können die Cellulosefasern auch durch nicht fibrillierte Fasern regenerierter Cellulose oder durch Zellstofffasern oder Mischungen daraus gebildet werden, wobei die Zellstofffasern bevorzugt aus Nadelhölzern, Laubhölzern oder anderen Pflanzen wie Hanf, Flachs, Jute, Ramie, Kenaf, Kapok, Kokosnuss, Abacá, Sisal, Bambus, Baumwolle oder Espartogras, oder aus Altpapierstoff gewonnen sind. Auch Mischungen aus Zellstofffasern verschiedener Herkunft können für die Herstellung des Separators eingesetzt werden. Besonders bevorzugt sind die Zellstofffasern aus Laubhölzern oder Nadelhölzern gewonnen.

Besonders bevorzugt ist, dass die Cellulosefasern eine Mischung aus Fasern regenerierter Cellulose, das heißt fibrillierter und eventuell nicht fibrillierter Fasern regenerierter Cellulose, und Zellstofffasern sind. In einer ganz besonders bevorzugten Ausführungsform beträgt das Verhältnis der Massen an Fasern regenerierter Cellulose und Zellstofffasern mindestens 1:1 und höchstens 30:1, bevorzugt mindestens 2:1 und höchstens 20:1, wobei aber weiterhin mindestens 50% der Masse des Separators durch fibrillierte Fasern regenerierter Cellulose gebildet sein müssen und die Cellulosefasern im Separator insgesamt mindestens 70% und höchstens 100% der Masse des Separators ausmachen müssen.

Besonders bevorzugt sind die Zellstofffasern zumindest zum Teil mikrofibrillierte Zellstofffasern, nanofibrillierte Zellstofffasern oder Zellstofffasern mit einer mittleren längengewichteten Länge von höchstens 0,2 mm, bevorzugt von höchstens 0,15 mm. Diese Arten von Zellstofffasern sind besonders gut geeignet, um den Separator mit einer kleinen mittleren Porengröße und einer kleinen Standardabweichung der Porengrößenverteilung auszustatten.

Der erfindungsgemäße Separator kann neben den Cellulosefasern auch noch weitere Fasern enthalten. Dazu können beispielsweise Fasern aus Cellulosederivaten, Glasfasern, Kunststofffasern, wie beispielsweise Fasern aus Polyolefinen, wie Polyethylen oder Polypropylen; aus Polyestern, wie Polyethylenterephthalat oder Polymilchsäuren; aus Polyarylaten wie Poly-(4-hydroxybenzoesäure-co-6-hydroxy-2-naphthoesäure); aus Polyethern, Polysulfonen, Polyurethanen, Polyamiden, aromatischen Polyamiden wie Poly-(p-phenylenterephthalamid); Polyimiden, Polyvinylalkohol, Polyacrylaten wie Polyacrylnitril oder Poly-(acrylonitril-co-methylacrylat); Polyphenylensulfid oder aus Poly-(ethylen-co-vinylacetat) gehören.

Bevorzugt beträgt der Anteil anderer Fasern als der Cellulosefasern zusammengenommen allerdings höchstens 30%, besonders bevorzugt höchstens 20% der Masse des Separators. Solche Fasern verbinden sich im Allgemeinen nicht durch Wasserstoffbrückenbindungen und können daher nicht so gut zu einer hohen 0,1%-Fließgrenze beitragen, wie die Cellulosefasern. Eine Ausnahme davon sind Fasern aus Polyvinylalkohol, die ebenfalls Wasserstoffbrückenbindungen bilden können und daher ganz besonders bevorzugt sind.

Der erfindungsgemäße Separator kann weitere Komponenten enthalten, die der Fachmann nach seiner Erfahrung passend zum Herstellungsprozess wählen kann, dazu gehören beispielsweise Polyvinylalkohol, Polyethylenglykol, Polyvinylidenflourid, Guaran, Stärke, Carboxymethylcellulose, Methylcellulose, Dialdehyde, wie Glyoxal, und anorganische Füllstoffe wie Kaolin, Titandioxid ($TiO_2$), Siliziumdioxid ($SiO_2$), Aluminiumoxid ($Al_2O_3$), Zirkoniumdioxid ($ZrO_2$) oder Calciumcarbonat ($CaCO_3$).

Die Menge der anorganischen Füllstoffe im Separator beträgt höchstens 30%, bevorzugt höchstens 20% und besonders bevorzugt höchstens 15% der Masse des Separators.

Der erfindungsgemäße Separator ist kalandriert, was bedeutet, dass die Faserbahn bei der Herstellung des Separators mindestens einen Walzspalt durchlaufen hat, in dem ein mechanischer Druck in Dickenrichtung auf die Faserbahn ausgeübt wurde. Das Kalandrieren reduziert die Dicke und verkleinert die Poren, reduziert aber auch die gesamte Porosität des Separators. Ein besonderer Effekt des Kalandrierens gemäß dem erfindungsgemäßen Verfahren besteht auch im Flachdrücken der fibrillierten Fasern regenerierter Cellulose, wie unter Bezugnahme auf Fig. 2 bereits erläutert wurde. Dazu sind bestimmte Einstellungen beim Kalandrieren günstig, die weiter unten im Zusammenhang mit dem erfindungsgemäßen Verfahren genauer beschrieben werden.

Unter Zugbelastung in Maschinenrichtung gemäß ISO 1924-2:2008 erreicht der erfindungsgemäße Separator seine 0,1%-Fließgrenze bei einer Dehnung von nicht weniger als 0,5% und nicht mehr als 2,0%, bevorzugt von nicht weniger als 0,55% und nicht mehr als 2,0% und besonders bevorzugt von nicht weniger als 0,6% und nicht mehr als 1,0%.

Unter Zugbelastung in Maschinenrichtung gemäß ISO 1924-2:2008 erreicht der erfindungsgemäße Separator bevorzugt seine 0,1%-Fließgrenze bei einer breitenbezogenen Zugspannung von mindestens 0,1 kN/m und höchstens 2,0 kN/m, besonders bevorzugt von mindestens 0,15 kN/m und höchstens 1,6 kN/m. Auf die Querschnittsfläche bezogen beträgt die Zugspannung in Maschinenrichtung bei der 0,1%-Fließgrenze bevorzugt mindestens 15 MPa und höchstens 30 MPa, besonders bevorzugt mindestens 18 MPa und höchstens 28 MPa.

Der Elastizitätsmodul in Maschinenrichtung gemäß ISO 1924-2:2008 beträgt bevorzugt mindestens 1 GPa und höchstens 8 GPa, besonders bevorzugt mindestens 2 GPa und höchstens 6 GPa. Ein hoher Elastizitätsmodul ist von Vorteil, weil sich der Separator unter Belastung weniger verformt, ein zu hoher Elastizitätsmodul ist aber von Nachteil, weil beispielsweise eine durch Geschwindigkeitsdifferenzen erzwungene Dehnung zu hohen Kräften im Separator führt und er reißen kann.

Das auf die Fläche bezogene elastische Energieaufnahmevermögen in Maschinenrichtung beträgt bevorzugt mindestens 0,05 J/m$^2$ und höchstens 0,8 J/m$^2$, besonders bevorzugt mindestens 0,10 J/m$^2$ und höchstens 0,60 J/m$^2$. Auf das Volumen bezogen beträgt das elastische Energieaufnahmevermögen in Maschinenrichtung bevorzugt mindestens 4 kJ/m$^3$ und höchstens 15 kJ/m$^3$ und besonders bevorzugt mindestens 5 kJ/m$^3$ und höchstens 13 kJ/m$^3$. Ein hohes elastisches Energieaufnahmevermögen wird durch eine hohe Spannung und Dehnung bei der 0,1%-Fließgrenze erreicht und erlaubt es, große mechanische Belastungen bei der Verarbeitung des Separators zu kompensieren, ohne dass irreversible Verformungen des Separators eintreten.

Die Zugfestigkeit gemäß ISO 1924-2:2008 in Maschinenrichtung des erfindungsgemäßen Separators beträgt, bezogen auf die Breite, bevorzugt mindestens 0,3 kN/m und höchstens 2,0 kN/m, besonders bevorzugt mindestens 0,5 kN/m und höchstens 1,5 kN/m. Bezogen auf die Querschnittsfläche beträgt die Zugfestigkeit in Maschinenrichtung des erfindungsgemäßen Separators bevorzugt mindestens 20 MPa und höchstens 60 MPa, besonders bevorzugt mindestens 30 MPa und höchstens 50 MPa.

Die Bruchdehnung gemäß ISO 1924-2:2008 in Maschinenrichtung des erfindungsgemäßen Separators beträgt bevorzugt mindestens 0,5% und höchstens 5,0%, besonders bevorzugt mindestens 1,0% und höchstens 4,0%.

Überraschenderweise haben die Erfinder festgestellt, dass der erfindungsgemäße Separator auch in Querrichtung günstige mechanische Eigenschaften, insbesondere eine hohe Bruchdehnung, aufweist, die sich mit Separatoren aus dem Stand der Technik nicht erreichen lassen. Die hohe Bruchdehnung ergibt sich aus der Einstellung eines kleinen mittleren Winkels, in dem sich die Cellulosefasern kreuzen, wie es in der Beschreibung zu Fig. 3 erläutert wurde. Der Winkel kann durch die Bahnspannung und andere Einstellungen, wie Temperatur oder Feuchte, bei der Herstellung des Separators beeinflusst werden, die weiter unten im Zusammenhang mit dem erfindungsgemäßen Verfahren beschrieben werden.

Dadurch ist der erfindungsgemäße Separator auch in Querrichtung dimensionsstabiler und verträgt höhere mechanische Belastungen bei der Herstellung eines elektrochemischen Elements ohne sich irreversibel zu verformen. Zudem besitzt er eine außergewöhnlich hohe Bruchdehnung in Querrichtung. All dies ist überraschend, weil erfindungsgemäß die Streckung der Fasern während der Herstellung des Separators vor allem in Maschinenrichtung erfolgt.

Unter Zugbelastung in Querrichtung gemäß ISO 1924-2:2008 erreicht der erfindungsgemäße Separator seine 0,1%-Fließgrenze bevorzugt bei einer Dehnung von nicht weniger als 0,4% und nicht mehr als 2,0%, besonders bevorzugt von nicht weniger als 0,45% und nicht mehr als 1,0%. Typische Separatoren aus dem Stand der Technik erreichen in Querrichtung ihre 0,1%-Fließgrenze schon bei einer Dehnung von 0,2% bis etwa 0,3%.

Unter Zugbelastung in Querrichtung gemäß ISO 1924-2:2008 erreicht der erfindungsgemäße Separator bevorzugt seine 0,1%-Fließgrenze bei einer breitenbezogenen Zugspannung von mindestens 0,1 kN/m und höchstens 0,8 kN/m, besonders bevorzugt von mindestens 0,15 kN/m und höchstens 0,6 kN/m. Auf die Querschnittsfläche bezogen beträgt die Zugspannung in Querrichtung bei der 0,1%-Fließgrenze bevorzugt mindestens 8 MPa und höchstens 15 MPa, besonders bevorzugt mindestens 10 MPa und höchstens 13 MPa.

Der Elastizitätsmodul in Querrichtung gemäß ISO 1924-2:2008 beträgt bevorzugt mindestens 1 GPa und höchstens 6 GPa, besonders bevorzugt mindestens 1,5 GPa und höchstens 5 GPa.

Das auf die Fläche bezogene elastische Energieaufnahmevermögen in Querrichtung beträgt bevorzugt mindestens 0,04 J/m$^2$ und höchstens 0,25 J/m$^2$, besonders bevorzugt mindestens 0,05 J/m$^2$ und höchstens 0,20 J/m$^2$. Auf das Volumen bezogen beträgt das elastische Energieaufnahmevermögen in Querrichtung bevorzugt mindestens 1,5 kJ/m$^3$ und höchstens 5,0 kJ/m$^3$ und besonders bevorzugt mindestens 2,0 kJ/m$^3$ und höchstens 4,0 kJ/m$^3$.

Die Zugfestigkeit gemäß ISO 1924-2:2008 in Querrichtung des erfindungsgemäßen Separators, bezogen auf die Breite, beträgt bevorzugt mindestens 0,3 kN/m und höchstens 2,0 kN/m, besonders bevorzugt mindestens 0,5 kN/m und höchstens 1,5 kN/m. Bezogen auf die Querschnittsfläche beträgt die Zugfestigkeit in Querrichtung des erfindungsgemäßen Separators bevorzugt mindestens 20 MPa und höchstens 60 MPa, besonders bevorzugt mindestens 30 MPa und höchstens 50 MPa.

Die Bruchdehnung gemäß ISO 1924-2:2008 in Querrichtung des erfindungsgemäßen Separators beträgt bevorzugt mindestens 1,0% und höchstens 8,0%, besonders bevorzugt mindestens 2,0% und höchstens 7,0%.

Ein für die Sicherheit des aus dem erfindungsgemäßen Separator gefertigten elektrochemischen Elements bedeutendes Merkmal ist die Schrumpfung des Separators bei erhöhten Temperaturen. Bevorzugt beträgt die Schrumpfung des erfindungsgemäßen Separators nach dem Aufheizen auf 150°C für 30 Minuten mindestens 0,4% und höchstens 1,2%, besonders bevorzugt mindestens 0,45% und höchstens 1%.

Der erfindungsgemäße Separator soll dünn sein, damit die im Elektrolyten fließenden Ionen nur einen kurzen Weg durch die Poren des Separators zwischen den beiden Elektroden zurücklegen müssen und das daraus gefertigte elektrochemische Element eine hohe volumetrische Energiedichte aufweist. Andererseits ist eine gewisse Dicke erforderlich, um die Elektroden sicher elektrisch voneinander zu isolieren und eine gute Festigkeit des Separators zu erreichen. Bevorzugt beträgt die Dicke des erfindungsgemäßen Separators daher mindestens 10 μm und höchstens 55 μm, besonders bevorzugt mindestens 12 μm und höchstens 35 μm. Die Dicke des Separators kann nach ISO 534:2011 an einem einzelnen Blatt bestimmt werden. Sie wird wesentlich durch die Einstellungen beim Kalandrieren des Separators und das Flächengewicht beeinflusst.

Das Flächengewicht des Separators sorgt für eine gute Festigkeit, allerdings steigen mit dem Flächengewicht auch die Dicke und der Materialaufwand. Bevorzugt beträgt das Flächengewicht des erfindungsgemäßen Separators daher mindestens 8 g/m² und höchstens 30 g/m², besonders bevorzugt mindestens 12 g/m² und höchstens 25 g/m². Das Flächengewicht kann nach ISO 536:2019 bestimmt werden.

Die Porosität eines Separators ist das Verhältnis aus dem Porenvolumen zum Gesamtvolumen des Separators und wird üblicherweise als Prozentsatz ausgedrückt. Die Porosität des Separators kann aus der Dicke und dem Flächengewicht, gemessen nach ISO 534:2011 bzw. ISO 536:2019, und der Dichte der Fasern abgeschätzt werden, wobei für die Fasern eine Dichte von 1500 kg/m³ gewählt werden kann. Näherungsweise kann unter diesen Annahmen die Porosität μ als Verhältnis des Porenvolumens zum Gesamtvolumen des Separators durch

$$\mu = 1 - \frac{2}{3}\frac{m}{d}$$

berechnet werden, wobei m das Flächengewicht in g/m² und d die Dicke in μm ist und die Porosität als Wert zwischen 0 und 1 erhalten wird und durch Multiplikation mit 100 in einen Prozentsatz umgewandelt werden kann. Die Porosität soll möglichst hoch sein, wird aber vor allem durch die nötige mechanische Festigkeit und die Anforderung, dass die Poren möglichst klein sein sollen, von oben begrenzt. Bevorzugt beträgt die Porosität mindestens 30% und höchstens 85%, besonders bevorzugt mindestens 35% und höchstens 75%.

Die Porengrößenverteilung, die mittlere Fließporengröße und die Standardabweichung der mittleren Fließporengröße können durch Kapillarströmungsporosimetrie gemäß ASTM F316-03(2019) *Standard Test Methods for Pore Size Characteristics of Membrane Filters by Bubble Point and Mean Flow Pore Test* bestimmt werden. Dabei wird die Durchflussmenge eines Mediums durch den Separator bei steigender Druckdifferenz bestimmt. Dieses Messverfahren ist für Separatoren besonders gut geeignet, weil nur Poren erfasst werden, die durch den Separator führen, und die engste Stelle jeder Pore den Durchfluss bestimmt. Diese Merkmale der Poren sind auch für die Leitung der Ionen durch den Separator von Bedeutung.

Die Poren im Separator sollen eine gewisse Größe nicht überschreiten, um das Wachstum von Dendriten auf den Elektroden zu begrenzen und sie sollen gleich groß sein, also eine Porengrößenverteilung mit kleiner Standardabweichung aufweisen. Bevorzugt beträgt die mittlere Fließporengröße daher mindestens 40 nm und höchstens 1000 nm, bevorzugt mindestens 50 nm und höchstens 800 nm.

Typischerweise sind die Porengrößen in erfindungsgemäßen Separatoren monomodal verteilt, sodass die Breite der Porengrößenverteilung durch die Standardabweichung der mittleren Fließporengröße gut charakterisiert werden kann. Die Standardabweichung der mittleren Fließporengröße beträgt beim erfindungsgemäßen Separator daher bevorzugt mindestens 3 nm und höchstens 300 nm, besonders bevorzugt mindestens 3 nm und höchstens 200 nm.

Da die Messung der Porengrößenverteilung mittels Kapillarströmungsporosimetrie aufwändig ist, kann vereinfacht die Porenstruktur des Separators auch durch die Luftdurchlässigkeit nach Gurley charakterisiert werden. Die Luftdurchlässigkeit ist auch ein gutes Maß dafür, wie rasch der Separator den Elektrolyten absorbieren kann. Eine hohe Absorptionsgeschwindigkeit ist für die Produktivität bei der Herstellung von elektrochemischen Elementen vorteilhaft. Die Luftdurchlässigkeit nach Gurley kann nach ISO 5636-5:2013 bestimmt werden und beträgt bevorzugt mindestens 10 s und höchstens 450 s, bevorzugt mindestens 20 s und höchstens 300 s.

Der Separator kann in elektrochemischen Elementen eingesetzt werden. Ein erfindungsgemäßes elektrochemisches Element umfasst zwei Elektroden, einen Elektrolyten und den erfindungsgemäßen Separator. Bevorzugt ist das elektrochemische Element ein Kondensator, ein Hybridkondensator, ein Superkondensator oder ein Akkumulator und besonders bevorzugt ist das elektrochemische Element eine Lithium-Ionen-Batterie.

Der erfindungsgemäße Separator kann durch ein erfindungsgemäßes Verfahren hergestellt werden, das die folgenden Schritte umfasst.

A - Herstellen einer Faserbahn umfassend Cellulosefasern,

B - Kalandrieren der Faserbahn aus Schritt A,

C - Aufrollen der den Separator bildenden Faserbahn,

wobei die Menge und Art der Cellulosefasern in der Faserbahn in Schritt A so gewählt sind, dass mindestens 50% der Masse des Separators in Schritt C durch fibrillierte Fasern regenerierter Cellulose gebildet werden und einschließlich der fibrillierten Fasern regenerierter Cellulose mindestens 70% und höchstens 100% der Masse des Separators in Schritt C durch Cellulosefasern gebildet werden und

wobei die Herstellung der Faserbahn in Schritt A oder das Kalandrieren der Faserbahn in Schritt B zumindest zum Teil bei einer Bahnspannung stattfindet, die mindestens 20% und höchstens 50% der breitenbezogenen Zugfestigkeit in Maschinenrichtung beträgt, die die Faserbahn direkt vor Schritt B aufweist und,

wobei der in Schritt C erhaltene Separator unter Zugbelastung in Maschinenrichtung nach ISO 1924-2:2008 seine 0,1%-Fließgrenze bei einer Dehnung von nicht weniger als 0,5% und nicht mehr als 2,0% erreicht.

Nach den Erkenntnissen der Erfinder lässt sich die Erhöhung der 0,1%-Fließgrenze unter anderem dadurch erreichen, dass die Faserbahn während der Herstellung in Schritt A oder während des Kalandrierens in Schritt B zum Teil einer hohen Zugbelastung in Maschinenrichtung ausgesetzt wird, die zwischen 20% und 50% der breitenbezogenen Zugfestigkeit (kN/m) der Faserbahn direkt vor Schritt B in Maschinenrichtung beträgt. Die Erfinder vermuten, dass durch die Belastung die Fasern in Maschinenrichtung gestreckt werden, sodass sich die Fasern im Mittel in kleineren Winkeln kreuzen und der fertige Separator auf Zugbelastungen bis zu höheren Dehnungen mit einem elastischen Verhalten reagiert, wie es bereits weiter oben unter Bezugnahme auf Fig. 3 erläutert wurde.

Die breitenbezogene Zugfestigkeit der Faserbahn direkt vor Schritt B in Maschinenrichtung hat sich dabei nach Erkenntnissen der Erfinder als günstiger Referenzwert herausgestellt. Direkt vor dem Schritt B des erfindungsgemäßen Verfahrens ist die Zugfestigkeit der Faserbahn schon gut ausgebildet, sodass sie einen repräsentativen Wert darstellt.

Bevorzugt beträgt die Zugbelastung der Faserbahn in Maschinenrichtung während zumindest eines Teils des Schritts A oder des Schritts B mindestens 25% und höchstens 40%, besonders bevorzugt mindestens 25% und höchstens 35% der breitenbezogenen Zugfestigkeit in Maschinenrichtung, die die Faserbahn direkt vor Schritt B aufweist. Die Zugbelastung der Faserbahn kann im Wesentlichen durch das aufgewendete Drehmoment der Walzen zum Transport der Faserbahn durch die Vorrichtung zur Herstellung oder zum Kalandrieren beeinflusst werden.

Selbstverständlich wird bei der ersten Durchführung des erfindungsgemäßen Verfahrens die breitenbezogene Zugfestigkeit in Maschinenrichtung, die die Faserbahn direkt vor Schritt B aufweist, noch nicht genau bekannt sein. Der Fachmann kann jedoch aus seiner Erfahrung basierend auf der Faserzusammensetzung, der Fibrillierung der Fasern und dem Flächengewicht der Faserbahn eine relativ genaue Schätzung der Zugfestigkeit der Faserbahn unmittelbar vor dem Kalandrieren in Schritt B vornehmen und als Basis für die Festsetzung der Bahnspannung verwenden. Wenn das Verfahren stabil läuft, kann die Bahnspannung noch genauer an die tatsächlich gemessene Zugfestigkeit von Proben der Faserbahn, die unmittelbar vor dem Kalandrieren in Schritt B entnommen wurden, angepasst werden. Dieser Schritt kann mehrfach wiederholt werden.

Die beschriebene Zugbelastung der Faserbahn kann während des Herstellens der Faserbahn in Schritt A oder während des Kalandrierens in Schritt B erfolgen.

Bevorzugt erfolgt das Herstellen der Faserbahn in Schritt A in einer Papiermaschine und umfasst die folgenden Schritte A.1 bis A.5,

A.1 - Bereitstellen einer wässrigen Suspension umfassend Cellulosefasern,

A.2 - Fibrillieren zumindest eines Teils der Cellulosefasern in der Suspension,

A.3 - Entwässern der Suspension auf einem umlaufenden Sieb zur Bildung einer Faserbahn,

A.4 - Entwässern der Faserbahn durch mechanischen Druck

A.5 - Trocknen der Faserbahn.

In dieser bevorzugten Ausführungsform des erfindungsgemäßen Verfahrens kann die Faserbahn der beschriebenen Bahnspannung bevorzugt in einer Trockenpartie, Schritt A.5, oder einer Pressenpartie, Schritt A.4, der Papiermaschine ausgesetzt werden. Dabei ist die Variante, bei der die Faserbahn der genannten Bahnspannung in der Pressenpartie, Schritt A. 4 ausgesetzt wird, besonders bevorzugt. Während sich in der Trockenpartie, Schritt A.5, die Struktur der Faserbahn schon teilweise verfestigt hat, kann sie in der Pressenpartie, Schritt A.4, noch leichter beeinflusst werden.

Es ist in manchen Ausführungsformen der Erfindung möglich, die Faserbahn auf einer separaten, von der Papiermaschine verschiedenen Vorrichtung der genannten Bahnspannung auszusetzen und so die gewünschte Dimensionsstabilität zu erreichen. Dies kann bevorzugt vor oder gleichzeitig mit dem Kalandrieren in Schritt B geschehen.

Dem Fachmann steht also eine Vielzahl von Verfahrensvarianten zur Verfügung, um die 0,1%-Fließgrenze des Separators erfindungsgemäß zu erhöhen und so zu einem Separator mit einer hohen Dimensionsstabilität zu kommen.

Die Erfinder gehen davon aus, dass eine erhöhte Feuchtigkeit der Faserbahn die Mobilität der Fasern erhöht und es damit einfacher möglich macht, die Fasern durch eine Zugbelastung zu strecken. Dies gilt vor allem für die fibrillierten Fasern regenerierter Cellulose, die in unverformter Lage stark gekräuselt sind. Bevorzugt beträgt die mittlere Feuchtigkeit der Faserbahn während einer Zugbelastung (zum Erzeugen der genannten Bahnspannung) in Schritt A oder B, die zwischen 20% und 50% der breitenbezogenen Zugfestigkeit in der Faserbahn direkt vor Schritt B in Maschinenrichtung beträgt, daher mindestens 4% und höchstens 15%, besonders bevorzugt mindestens 5% und höchstens 12%. Wählt man die Feuchtigkeit im oberen Bereich der angegebenen Intervalle, dann ist es möglich die Zugbelastung der Faserbahn niedriger zu wählen. In einer ganz besonders bevorzugten Ausführungsform des erfindungsgemäßen Verfahrens beträgt die mittlere Feuchtigkeit der Faserbahn während einer Zugbelastung in Schritt A oder B, die zwischen 20% und 30% der breitenbezogenen Zugfestigkeit in der Faserbahn direkt vor Schritt B in Maschinenrichtung beträgt, mindestens 8% und höchstens 15%.

Bevorzugt ist die Feuchtigkeit der Faserbahn über die Breite der Faserbahn homogen, um aber spezielle Anforderungen des Herstellungsprozesses zu erfüllen, kann in der Faserbahn mit aus dem Stand der Technik bekannten Mitteln, beispielsweise einem Sprühbalken, ein bestimmtes Feuchtigkeitsprofil über die Breite erzeugt werden.

In Schritt B wird auf die Faserbahn aus Schritt A in mindestens einem Walzspalt mechanischer Druck orthogonal zur Faserbahn ausgeübt, sodass sie in Dickenrichtung komprimiert wird. Bei entsprechenden Einstellungen von Druck und Temperatur in dem Walzspalt oder den Walzspalten werden die Fasern flachgedrückt und die Kontaktfläche zwischen den fibrillierten Fasern regenerierter Cellulose wird, wie in Fig. 2 dargestellt, entsprechend vergrößert. Dadurch wird die 0,1%-Fließgrenze zu höheren Spannungen und Dehnungen verschoben und der Separator wird dimensionsstabiler.

Bevorzugt ist die Zahl der Walzspalten in Schritt B höher und beträgt mindestens 2 und höchstens 14, besonders bevorzugt mindestens 3 und höchstens 10.

Es hat sich für die Durchführung des Kalandrierprozesses gemäß den Erkenntnissen der Erfinder als vorteilhaft erwiesen, wenn die den Walzspalt oder die Walzspalte bildenden Walzen eine erhöhte Temperatur aufweisen. Bevorzugt beträgt die mittlere Temperatur aller oder eines Teils dieser Walzen in Schritt B daher mindestens 25°C und höchsten 140°C und besonders bevorzugt mindestens 50°C und höchstens 140°C, besonders bevorzugt mindestens 80°C und höchstens 140°C. Bei Temperaturen über 80°C kann es auch zu einer kovalenten Vernetzung und Fixierung der Faserstruktur kommen, was die 0,1%-Fließgrenze noch weiter verbessern kann.

Der mechanische Druck in allen oder einem Teil der Walzspalte in Schritt B beträgt mindestens 80 kN/m und höchstens 400 kN/m, bevorzugt mindestens 160 kN/m und höchstens 320 kN/m. Die bevorzugten Intervalle erlauben eine besonders günstige Kombination aus mehreren Effekten. Dazu gehören die Vergrößerung der Kontaktfläche zwischen den fibrillierten Fasern regenerierter Cellulose, die Reduktion der Dicke und die Verkleinerung der mittleren Porengröße, ohne die Porosität zu stark zu reduzieren.

Die Menge der Cellulosefasern in Schritt A wird so gewählt, dass der Separator in Schritt C zu mindestens 50% seiner Masse durch fibrillierte Fasern regenerierter Cellulose gebildet wird. Bevorzugt ist der Anteil an fibrillierten Fasern regenerierter Cellulose aber höher und beträgt mindestens 55% und höchstens 100% und besonders bevorzugt mindestens 60% und höchstens 95% der Masse des Separators in Schritt C.

Die fibrillierten Fasern regenerierter Cellulose sind bevorzugt in einem Lösungsmittel gesponnene Fasern ("*solvent-spun*") regenerierter Cellulose, besonders bevorzugt Lyocell® Fasern.

Die mittlere lineare Dichte der fibrillierten Fasern regenerierter Cellulose vor dem Fibrillieren beträgt mindestens 0,8 g/10000 m (0,8 dtex) und höchstens 3,0 g/10000 m (3,0 dtex) und besonders bevorzugt mindestens 1,0 g/10000 m (1,0 dtex) und höchstens 2,5 g/10000 m (2,5 dtex).

Die Länge der fibrillierten Fasern regenerierter Cellulose vor dem Fibrillieren beträgt mindestens 2 mm und höchstens 8 mm und besonders bevorzugt mindestens 3 mm und höchstens 6 mm.

Einschließlich der fibrillierten Fasern regenerierter Cellulose wird der Separator in Schritt C zu mindestens 70% und höchstens 100% seiner Masse durch Cellulosefasern gebildet. Bevorzugt beträgt der Anteil an Cellulosefasern mindestens 75% und höchstens 95% bezogen auf die Masse des Separators in Schritt C.

Ergänzend zu den fibrillierten Fasern regenerierter Cellulose können die Cellulosefasern auch durch nicht fibrillierte Fasern regenerierter Cellulose oder durch Zellstofffasern oder Mischungen daraus gebildet werden, wobei die Zellstofffasern bevorzugt aus Nadelhölzern, Laubhölzern oder anderen Pflanzen wie Hanf, Flachs, Jute, Ramie, Kenaf, Kapok, Kokosnuss, Abacá, Sisal, Bambus, Baumwolle oder Espartogras, oder aus Altpapierstoff gewonnen sind. Auch Mischungen aus Zellstofffasern verschiedener Herkunft können für die Herstellung des Separators in Schritt A eingesetzt werden. Besonders bevorzugt sind die Zellstofffasern aus Laubhölzern oder Nadelhölzern gewonnen.

Besonders bevorzugt ist, dass die Cellulosefasern eine Mischung aus Fasern regenerierter Cellulose, das heißt fibrillierter und eventuell nicht fibrillierter Fasern regenerierter Cellulose, und Zellstofffasern sind. In einer ganz besonders bevorzugten Ausführungsform beträgt das Verhältnis der Massen an Fasern regenerierter Cellulose und Zellstofffasern mindestens 1:1 und höchstens 30:1, bevorzugt mindestens 2:1 und höchstens 20:1, wobei aber weiterhin mindestens 50% der Masse des Separators in Schritt C durch fibrillierte Fasern regenerierter Cellulose gebildet sein müssen und die Cellulosefasern im Separator insgesamt mindestens 70% und höchstens 100% der Masse des Separators in Schritt C ausmachen müssen.

Besonders bevorzugt sind die Zellstofffasern zumindest zum Teil mikrofibrillierte Zellstofffasern, nanofibrillierte Zellstofffasern oder Zellstofffasern mit einer mittleren längengewichteten Länge von höchstens 0,2 mm, bevorzugt von höchstens 0,15 mm.

Der Separator in Schritt C kann neben den Cellulosefasern auch noch weitere Fasern enthalten. Dazu können beispielsweise Fasern aus Cellulosederivaten, Glasfasern, Kunststofffasern, wie beispielsweise Fasern aus Polyolefinen, wie Polyethylen oder Polypropylen; aus Polyestern, wie Polyethylenterephthalat oder Polymilchsäuren; aus Polyarylaten wie Poly-(4-hydroxybenzoesäure-co-6-hydroxy-2-naphthoesäure); aus Polyethern, Polysulfonen, Polyurethanen, Polyamiden, aromatischen Polyamiden wie Poly-(p-phenylenterephthalamid); Polyimiden, Polyvinylalkohol, Polyacrylaten wie Polyacrylnitril oder Poly-(acrylonitril-co-methylacrylat); Polyphenylensulfid oder aus Poly-(ethylen-co-vinylacetat) gehören.

Bevorzugt beträgt der Anteil anderer Fasern als der Cellulosefasern zusammengenommen allerdings höchstens 30%, besonders bevorzugt höchstens 20% der Masse des Separators in Schritt C.

Unter Zugbelastung in Maschinenrichtung gemäß ISO 1924-2:2008 erreicht der Separator in Schritt C seine 0,1%-Fließgrenze bei einer Dehnung von nicht weniger als 0,5% und nicht mehr als 2,0%, bevorzugt von nicht weniger als 0,55% und nicht mehr als 2,0% und besonders bevorzugt von nicht weniger als 0,6% und nicht mehr als 1%.

Unter Zugbelastung in Maschinenrichtung gemäß ISO 1924-2:2008 erreicht der Separator in Schritt C bevorzugt seine 0,1%-Fließgrenze bei einer Zugspannung von mindestens 0,1 kN/m und höchstens 2,0 kN/m, besonders bevorzugt von mindestens 0,15 kN/m und höchstens 1,6 kN/m. Auf die Querschnittsfläche bezogen beträgt die Zugspannung in Maschinenrichtung bei der 0,1%-Fließgrenze bevorzugt mindestens 15 MPa und höchstens 30 MPa, besonders bevorzugt mindestens 18 MPa und höchstens 28 MPa.

Das elastische Energieaufnahmevermögen in Maschinenrichtung beträgt bevorzugt mindestens 0,05 J/m$^2$ und höchstens 0,8 J/m$^2$, besonders bevorzugt mindestens 0,10 J/m$^2$ und höchstens 0,6 J/m$^2$. Auf das Volumen bezogen beträgt das elastische Energieaufnahmevermögen in Maschinenrichtung bevorzugt mindestens 4 kJ/m$^3$ und höchstens 15 kJ/m$^3$ und besonders bevorzugt mindestens 5 kJ/m$^3$ und höchstens 13 kJ/m$^3$.

Unter Zugbelastung in Querrichtung gemäß ISO 1924-2:2008 erreicht der Separator in Schritt C seine 0,1%-Fließgrenze bevorzugt bei einer Dehnung von nicht weniger als 0,4% und nicht mehr als 2,0%, besonders bevorzugt von nicht weniger als 0,45% und nicht mehr als 1%.

Unter Zugbelastung in Querrichtung gemäß ISO 1924-2:2008 erreicht der Separator in Schritt C bevorzugt seine 0,1%-Fließgrenze bei einer Zugspannung von mindestens 0,1 kN/m und höchstens 0,8 kN/m, besonders bevorzugt von mindestens 0,15 kN/m und höchstens 0,6 kN/m. Auf die Querschnittsfläche bezogen beträgt die Zugspannung in Querrichtung bei der 0,1%-Fließgrenze bevorzugt mindestens 8 MPa und höchstens 15 MPa, besonders bevorzugt mindestens 10 MPa und höchstens 13 MPa.

Das elastische Energieaufnahmevermögen in Querrichtung beträgt bevorzugt mindestens 0,04 J/m$^2$ und höchstens 0,25 J/m$^2$, besonders bevorzugt mindestens 0,05 J/m$^2$ und höchstens 0,20 J/m$^2$. Auf das Volumen bezogen beträgt das elastische Energieaufnahmevermögen in Querrichtung bevorzugt mindestens 1,5 kJ/m$^3$ und höchstens 5 kJ/m$^3$ und besonders bevorzugt mindestens 2 kJ/m$^3$ und höchstens 4 kJ/m$^3$.

Weitere Parameter des Separators aus Schritt C, wie der Elastizitätsmodul in Maschinen- und Querrichtung, die Zugfestigkeit in Maschinen- und Querrichtung, die Bruchdehnung in Maschinen- und Querrichtung, die Schrumpfung, das Flächengewicht, die Dicke, die Porosität, die mittlere Fließporengröße, die Standardabweichung der mittleren Fließporengröße und die Luftdurchlässigkeit gelten in den angegebenen und bevorzugten Intervallen wie weiter oben für den erfindungsgemäßen Separator offenbart.

KURZE BESCHREIBUNG DER FIGUREN

Fig. 1  zeigt ein beispielhaftes Spannungs-Dehnungsdiagramm zur Ermittlung der 0,1%- Fließgrenze.

Fig. 2  zeigt beispielhaft die Kontaktfläche sich kreuzender, fibrillierter Fasern regenerierter Cellulose vor und nach dem Kalandrieren in Schritt B.

Fig. 3  zeigt beispielhaft den Einfluss des Kreuzungswinkels zwischen zwei Cellulosefasern auf die Größe der Kontaktfläche.

BESCHREIBUNG EINIGER BEVORZUGTER AUSFÜHRUNGSFORMEN

Im Folgenden werden einige bevorzugte Ausführungsformen erfindungsgemäßer Separatoren sowie nicht erfindungsgemäße Separatoren als Vergleichsbeispiel beschrieben.

Ausführungsbeispiel 1

Gemäß Schritt A des erfindungsgemäßen Verfahrens wurde auf einer Papiermaschine eine Faserbahn erzeugt, die bezogen auf die Masse des fertigen Separators aus 77% fibrillierten Fasern regenerierter Cellullose, aus 13% nanofibrillierten Zellstofffasern und aus 10% Fasern aus Polyethylenterephthalat (PET) bestand.

Die Faserbahn wurde in einem Kalander mit 4 Walzspalten bei einer Linienlast von 150 kN/m bei einer Temperatur der die Walzspalte bildenden Walzen von 130°C gemäß Schritt B kalandriert. Danach wurde die Faserbahn aufgerollt, Schritt C, und so der Separator erhalten. Die Zugfestigkeit der Faserbahn unmittelbar vor dem Kalandrieren in Schritt B betrug in Maschinenrichtung etwa 0,4 kN/m und entsprechend dieser Zugfestigkeit wurden verschiedene Bahnspannungen direkt vor dem Beginn des Kalandrierprozesses gewählt. Das Flächengewicht des Separators betrug 15,6 g/m$^2$ gemäß ISO 536:2019 und die Dicke eines einzelnen Blatts gemessen nach ISO 534:2011 betrug etwa 22,3 $\mu$m. Von den so erhaltenen Separatoren wurden Zugfestigkeit, Bruchdehnung, Elastizitätsmodul und Spannungs-Dehnungs-Verlauf gemäß ISO 1924-2:2008 bestimmt und daraus die 0,1%-Fließgrenze und das elastische Energieaufnahmevermögen berechnet.

Die Daten sind in Tabelle 1 für die Maschinenrichtung und in Tabelle 2 für die Querrichtung angegeben, wobei "WT/TS" das Verhältnis der Bahnspannung direkt vor dem Beginn des Kalandrierens zur breitenbezogenen Zugfestigkeit der Faserbahn unmittelbar vor dem Kalandrieren in Maschinenrichtung, "LL" die beim Kalandrieren in allen Walzspalten ausgeübte mechanische Linienlast, "TH" die Dicke, "0,1%-YP" die 0,1%-Fließgrenze mit der zugehörigen Spannung in kN/m und MPa und der zugehörigen Dehnung in %, "EEA" das elastische Energieaufnahmevermögen in J/m$^2$ und kJ/m$^3$ und "YM" den Elastizitätsmodul in GPa bezeichnen.

Tabelle 1

| Code | | | | Maschinenrichtung | | | | | |
|------|------|------|------|------|------|------|------|------|------|
| | WT/TS | LL | TH | 0,1%-YP | | | EEA | | YM |
| | % | kN/m | $\mu$m | kN/m | MPa | % | J/m$^2$ | kJ/m$^3$ | GPa |
| X | 10 | 150 | 22,5 | 0,25 | 11,1 | 0,40 | 0,05 | 2,4 | 3,6 |
| Y | 15 | 150 | 22,3 | 0,29 | 12,9 | 0,43 | 0,07 | 3,0 | 3,7 |
| A | 20 | 150 | 22,1 | 0,55 | 24,9 | 0,69 | 0,21 | 9,5 | 4,2 |
| B | 30 | 150 | 22,2 | 0,50 | 22,6 | 0,64 | 0,17 | 7,9 | 4,2 |
| C | 40 | 150 | 22,2 | 0,46 | 20,6 | 0,57 | 0,14 | 6,3 | 4,4 |

Tabelle 2

| Code | | | | Querrichtung | | | | | |
|------|------|------|------|------|------|------|------|------|------|
| | WT/TS | LL | TH | 0,1%-YP | | | EEA | | YM |
| | % | kN/m | $\mu$m | kN/m | MPa | % | J/m$^2$ | kJ/m$^3$ | GPa |
| X | 10 | 150 | 22,5 | 0,18 | 8,2 | 0,41 | 0,04 | 1,8 | 2,6 |
| Y | 15 | 150 | 22,3 | 0,19 | 8,4 | 0,40 | 0,04 | 1,8 | 2,6 |
| A | 20 | 150 | 22,1 | 0,28 | 12,5 | 0,61 | 0,09 | 4,2 | 2,5 |
| B | 30 | 150 | 22,3 | 0,25 | 11,4 | 0,57 | 0,08 | 3,6 | 2,5 |
| C | 40 | 150 | 22,2 | 0,25 | 11,1 | 0,58 | 0,08 | 3,5 | 2,4 |

Aus Tabelle 1 erkennt man, dass die beiden nicht erfindungsgemäßen Separatoren X und Y ihre 0,1%-Fließgrenze bei einer relativ geringen Dehnung von unter 0,45% erreichen. Der Elastizitätsmodul in Maschinenrichtung der erfindungsgemäßen Separatoren A, B und C ist etwas höher als jener der nicht erfindungsgemäßen Separatoren X und Y, sodass selbst bei gleicher Dehnung die erfindungsgemäßen Separatoren A, B und C mehr elastische Verformungsenergie aufnehmen können und schon alleine deshalb dimensionsstabiler sind.

Man erkennt auch, dass das elastische Verhalten zu höheren Dehnungen hin erweitert werden kann, wenn die Bahnspannung etwa 20% der breitenbezogenen Zugfestigkeit in Maschinenrichtung überschreitet, die die Faserbahn unmittelbar vor Schritt B aufweist,. Eine Steigerung des Verhältnisses der Bahnspannung zur breitenbezogenen Zugfestigkeit des Separators in Maschinenrichtung über 20% ist möglich, bringt jedoch keine Verbesserungen bei der 0,1%-Fließgrenze.

Überraschend ist der Effekt in Querrichtung, weil zu erwarten war, dass sich bei einer Zugbelastung in Maschinenrichtung während der Herstellung die mechanischen Eigenschaften des fertig gestellten Separators in Querrichtung nicht wesentlich verändern oder eher sogar verschlechtern. Die Experimente zeigen aber, dass es auch in Querrichtung zu einer Verschiebung der 0,1%-Fließgrenze zu höheren Spannungen und Dehnungen kommt und daher auch das elastische Energieaufnahmevermögen in Querrichtung erheblich gesteigert werden kann.

Die Porenstruktur des erfindungsgemäßen Separators A wurde mittels ASTM F316-03(2019) durch Kapillarströmungsporosimetrie bestimmt. Die mittlere Fließporengröße betrug 173 nm bei einer Standardabweichung von 150 nm. Die Porosität betrug 45% und die Luftdurchlässigkeit nach Gurley, gemäß ISO 5636-5:2013 betrug 54 s.

Aufgrund der mechanischen Eigenschaften und der Porenstruktur sind die erfindungsgemäßen Separatoren A, B und C zur Herstellung von elektrochemischen Elementen gut geeignet und die experimentelle Herstellung von Lithium-Ionen-Batterien war problemlos möglich.

Ausführungsbeispiel 2

Gemäß Schritt A des erfindungsgemäßen Verfahrens wurde auf einer Papiermaschine eine Faserbahn erzeugt, die bezogen auf die Masse des fertigen Separators aus 90% fibrillierten Fasern regenerierter Cellullose und aus 10% nanofibrillierten Zellstofffasern bestand.

Die Faserbahn wurde in einem Kalander mit 6 Walzspalten bei verschiedenen Linienlasten von 80 kN/m bis 400 kN/m bei einer Temperatur der die Walzspalte bildenden Walzen von 90°C gemäß Schritt B kalandriert. Danach wurde die Faserbahn aufgerollt, Schritt C, und so mehrere Separatoren erhalten. Die breitenbezogene Zugfestigkeit in Maschinenrichtung, die die Faserbahn unmittelbar vor dem Kalandrieren in Schritt B aufwies, betrug etwa 0,44 kN/m bis 0,46 kN/m und entsprechend dieser Zugfestigkeit wurde die Faserbahn im Bereich der Trockenpartie in Schritt A verschiedenen Bahnspannungen ausgesetzt, wobei die Faserbahn vor diesem Bereich der Trockenpartie in der Leimpresse befeuchtet wurde. Das Flächengewicht des Separators betrug etwa 15,6 g/m$^2$ gemäß ISO 536:2019. Von den so erhaltenen Separatoren wurden Zugfestigkeit, Bruchdehnung, Elastizitätsmodul und Spannungs-Dehnungs-Verlauf gemäß ISO 1924-2:2008 bestimmt und daraus die 0,1%-Fließgrenze und das elastische Energieaufnahmevermögen berechnet.

Die Daten sind in Tabelle 3 für die Maschinenrichtung und in Tabelle 4 für die Querrichtung angegeben, wobei "WT/TS" das Verhältnis der Bahnspannung in der Trockenpartie von Schritt A zur breitenbezogenen Zugfestigkeit der Faserbahn unmittelbar vor dem Kalandrieren in Maschinenrichtung, "LL" die beim Kalandrieren in allen Walzspalten ausgeübte mechanische Linienlast, "TH" die Dicke, "0,1%-YP" die 0,1%-Fließgrenze mit der zugehörigen Spannung in kN/m und MPa und der zugehörigen Dehnung in %, "EEA" das elastische Energieaufnahmevermögen in J/m$^2$ und kJ/m$^3$ und "YM" den Elastizitätsmodul in GPa bezeichnen.

Tabelle 3

| Code | | | | Maschinenrichtung | | | | | |
|------|-------|------|------|-------|------|------|-------|-------|------|
| | WT/TS | LL | TH | 0,1%-YP | | | EEA | | YM |
| | % | kN/m | μm | kN/m | MPa | % | J/m$^2$ | kJ/m$^3$ | GPa |
| V | 10 | 240 | 20,3 | 0,28 | 13,8 | 0,47 | 0,07 | 3,5 | 3,8 |
| W | 15 | 240 | 20,2 | 0,31 | 15,5 | 0,49 | 0,08 | 4,1 | 3,9 |
| D | 20 | 240 | 20,0 | 0,47 | 23,6 | 0,67 | 0,17 | 8,6 | 4,2 |
| E | 30 | 240 | 20,1 | 0,54 | 26,9 | 0,65 | 0,19 | 9,5 | 4,7 |
| F | 40 | 240 | 20,2 | 0,51 | 25,5 | 0,61 | 0,17 | 8,4 | 4,8 |
| G | 25 | 80 | 20,8 | 0,55 | 26,3 | 0,72 | 0,21 | 10,3 | 4,1 |
| H | 25 | 400 | 19,4 | 0,46 | 23,8 | 0,56 | 0,14 | 7,1 | 5,0 |

Tabelle 4

| Code | | | | Querrichtung | | | | | |
|------|------|------|------|------|------|------|------|------|------|
| | WT/TS | LL | TH | 0,1%-YP | | | EEA | | YM |
| | % | kN/m | μm | kN/m | MPa | % | J/m$^2$ | kJ/m$^3$ | GPa |
| V | 10 | 240 | 20,3 | 0,16 | 7,8 | 0,40 | 0,03 | 1,7 | 2,6 |
| W | 15 | 240 | 20,2 | 0,16 | 7,7 | 0,39 | 0,03 | 1,6 | 2,5 |
| D | 20 | 240 | 20,0 | 0,20 | 9,9 | 0,49 | 0,05 | 2,7 | 2,4 |
| E | 30 | 240 | 20,1 | 0,21 | 10,3 | 0,50 | 0,06 | 2,8 | 2,4 |
| F | 40 | 240 | 20,2 | 0,19 | 9,3 | 0,48 | 0,05 | 2,4 | 2,2 |
| G | 25 | 80 | 20,8 | 0,19 | 9,3 | 0,52 | 0,05 | 2,6 | 2,0 |
| H | 25 | 400 | 19,4 | 0,18 | 9,2 | 0,45 | 0,04 | 2,2 | 2,4 |

Aus Tabelle 3 erkennt man, dass die beiden nicht erfindungsgemäßen Separatoren V und W ihre 0,1%-Fließgrenze in Maschinenrichtung bei einer Dehnung von 0,47% bzw. 0,49% erreichen. Der Elastizitätsmodul in Maschinenrichtung der erfindungsgemäßen Separatoren D, E, F, G und H ist etwas höher als jener der nicht erfindungsgemäßen Separatoren V und W, sodass selbst bei gleicher Dehnung die erfindungsgemäßen Separatoren D bis H mehr elastische Verformungsenergie aufnehmen können und schon alleine deshalb dimensionsstabiler sind.

Man erkennt auch, dass das elastische Verhalten zu höheren Dehnungen hin erweitert werden kann, wenn die Bahnspannung in der Trockenpartie in Schritt A etwa 20% der breitenbezogenen Zugfestigkeit in Maschinenrichtung überschreitet, die die Faserbahn unmittelbar vor dem Kalandrieren aufweist,. Eine Steigerung des Verhältnisses der Bahnspannung zur breitenbezogenen Zugfestigkeit der Faserbahn unmittelbar vor dem Kalandrieren in Maschinenrichtung über 20% ist möglich, und bringt teilweise noch Verbesserungen bei der 0,1%-Fließgrenze und dem elastischen Energieaufnahmevermögen.

Ein Vergleich der erfindungsgemäßen Separatoren D, G und H zeigt, dass die Linienlast beim Kalandrieren einen Einfluss auf das elastische Energieaufnahmevermögens haben kann. Bei hohen Linienlasten sinkt das elastische Energieaufnahmevermögen in Maschinenrichtung und Querrichtung.

Der Zugversuch nach ISO 1924-2:2008 zeigte für die erfindungsgemäßen Separatoren D bis H eine Bruchdehnung in Querrichtung von 5,5% bis 7,3%, was ein sehr hoher Wert ist. Im Vergleich betrug die Bruchdehnung in Querrichtung bei den nicht erfindungsgemäßen Separatoren V und W weniger als 5%. Dies ist ein weiterer Vorteil des erfindungsgemäßen Verfahrens.

Die Luftdurchlässigkeit der erfindungsgemäßen Separatoren nach Gurley, gemäß ISO 5636-5:2013 betrug zwischen 140 s und 250 s und die mittlere Fließporengröße zwischen 130 nm und 160 nm bei einer Standardabweichung der mittleren Fließporengröße von 80 nm bis 150 nm, weshalb davon auszugehen ist, dass die Porenstruktur für die Verwendung als Separator in elektrochemischen Elementen geeignet ist.

Die Herstellung von Lithium-Ionen-Batterien aus den erfindungsgemäßen Separatoren D bis H war problemlos möglich.

Auch die nicht erfindungsgemäßen Separatoren X, Y, V und W sind für die Herstellung von elektrochemischen Elementen geeignet, allerdings weisen die erfindungsgemäßen Separatoren A bis H günstigere mechanische Eigenschaften auf, sodass daraus elektrochemische Elemente mit besseren Leistungsparametern bei höherer Produktivität hergestellt werden können.

**Patentansprüche**

1.  Separator für elektrochemische Elemente, bei dem

mindestens 50% der Masse des Separators durch fibrillierte Fasern regenerierter Cellulose gebildet werden, wobei einschließlich der fibrillierten Fasern regenerierter Cellulose mindestens 70% und höchstens 100% der Masse des Separators durch Cellulosefasern gebildet werden, wobei der Separator kalandriert ist, und wobei der Separator unter Zugbelastung in Maschinenrichtung nach ISO 1924-2:2008 seine 0,1%-Fließgrenze bei einer Dehnung von nicht weniger als 0,5% und nicht mehr als 2,0% erreicht.

2.  Separator nach Anspruch 1, bei dem der Anteil an fibrillierten Fasern regenerierter Cellulose mindestens 55% und höchstens 100%, vorzugsweise mindestens 60% und höchstens 95% der Masse des Separators beträgt, und/oder

bei dem die fibrillierten Fasern regenerierter Cellulose durch in einem Lösungsmittel gesponnene Fasern regenerierter Cellulose gebildet sind, vorzugsweise durch Lyocell® Fasern, und/oder

bei dem die mittlere lineare Dichte der fibrillierten Fasern regenerierter Cellulose vor dem Fibrillieren mindestens 0,8 g/10000 m (0,8 dtex) und höchstens 3,0 g/10000 m (3,0 dtex), vorzugsweise mindestens 1,0 g/10000 m (1,0 dtex) und höchstens 2,5 g/10000 m (2,5 dtex) beträgt.

3. Separator nach einem der vorhergehenden Ansprüche, bei dem die mittlere Länge der fibrillierten Fasern regenerierter Cellulose vor dem Fibrillieren mindestens 2 mm und höchstens 8 mm, vorzugsweise mindestens 3 mm und höchstens 6 mm beträgt, und/oder

bei dem der Anteil an Cellulosefasern, inklusive der fibrillierten Fasern regenerierter Cellulose, mindestens 75% und höchstens 95% bezogen auf die Masse des Separators beträgt, und/oder

bei dem die genannten Cellulosefasern zusätzlich zu den fibrillierten Fasern regenerierter Cellulose auch nicht fibrillierte Fasern regenerierter Cellulose, Zellstofffasern, oder Mischungen daraus enthalten,

wobei die Cellulosefasern vorzugsweise eine Mischung aus Fasern regenerierter Cellulose und Zellstofffasern sind,

wobei die Fasern regenerierter Cellulose jedenfalls fibrillierte und optional nicht fibrillierte Fasern regenerierter Cellulose enthalten,

und wobei das Verhältnis der Massen an Fasern regenerierter Cellulose und an Zellstofffasern mindestens 1:1 und höchstens 30:1, vorzugsweise mindestens 2:1 und höchstens 20:1 beträgt, unter der Bedingung, dass mindestens 50% der Masse des Separators durch fibrillierte Fasern regenerierter Cellulose gebildet sind und die Cellulosefasern im Separator insgesamt mindestens 70% und höchstens 100% der Masse des Separators ausmachen.

4. Separator nach einem der vorhergehenden Ansprüche, bei dem die Zellstofffasern zumindest zum Teil mikrofibrillierte Zellstofffasern, nanofibrillierte Zellstofffasern oder Zellstofffasern mit einer mittleren längengewichteten Länge von höchstens 0,2 mm, bevorzugt von höchstens 0,15 mm sind, und/oder

der neben den Cellulosefasern auch Fasern aus Cellulosederivaten, Glasfasern, oder Kunststofffasern enthält, wobei die Kunststofffasern vorzugsweise durch Polyolefine, insbesondere Polyethylen oder Polypropylen; durch Polyester, insbesondere Polyethylenterephthalat oder Polymilchsäuren; durch Polyarylate insbesondere Poly-(4-hydroxybenzoesäure-co-6-hydroxy-2-naphthoesäure); durch Polyether, Polysulfone, Polyurethane, Polyamide, durch aromatische Polyamide, insbesondere Poly-(p-phenylenterephthalamid); durch Polyimide, Polyvinylalkohol, Polyacrylate, insbesondere Polyacrylnitril oder Poly-(acrylonitril-co-methylacrylat); durch Polyphenylensulfid oder durch Poly-(ethylen-co-vinylacetat) gebildet werden, wobei der Anteil anderer Fasern als der Cellulosefasern zusammengenommen vorzugsweise höchstens 30%, besonders bevorzugt höchstens 20% der Masse des Separators beträgt.

5. Separator nach einem der vorhergehenden Ansprüche, der weiterhin eine oder mehrere der folgenden Substanzen bzw. Bestandteile enthält: Polyvinylalkohol, Polyethylenglykol, Polyvinylidenflourid, Guaran, Stärke, Carboxymethylcellulose, Methylcellulose, Dialdehyde, insbesondere Glyoxal, oder einen oder mehrere anorganische Füllstoffe, insbesondere Kaolin, Titandioxid ($TiO_2$), Siliziumdioxid ($SiO_2$), Aluminiumoxid ($Al_2O_3$), Zirkoniumdioxid ($ZrO_2$) oder Calciumcarbonat ($CaCO_3$), wobei die Menge der anorganischen Füllstoffe vorzugsweise höchstens 30%, besonders bevorzugt höchstens 20% und besonders bevorzugt höchstens 15% der Masse des Separators beträgt.

6. Separator nach einem der vorhergehenden Ansprüche, der unter Zugbelastung in Maschinenrichtung gemäß ISO 1924-2:2008 seine 0,1%-Fließgrenze bei einer Dehnung von nicht weniger als 0,55% und nicht mehr als 2,0% und bevorzugt von nicht weniger als 0,6% und nicht mehr als 1,0% erreicht, und/oder

der unter Zugbelastung in Maschinenrichtung gemäß ISO 1924-2:2008 seine 0,1%-Fließgrenze bei einer breitenbezogenen Zugspannung von mindestens 0,1 kN/m und höchstens 2,0 kN/m, bevorzugt von mindestens 0,15 kN/m und höchstens 1,6 kN/m erreicht, und/oder

der unter Zugbelastung in Maschinenrichtung gemäß ISO 1924-2:2008 seine 0,1%-Fließgrenze bei einer auf die Querschnittsfläche bezogenen Zugspannung von mindestens 15 MPa und höchstens 30 MPa, bevorzugt von mindestens 18 MPa und höchstens 28 MPa erreicht.

7. Separator nach einem der vorhergehenden Ansprüche, dessen Elastizitätsmodul in Maschinenrichtung gemäß ISO 1924-2:2008 mindestens 1 GPa und höchstens 8 GPa, bevorzugt mindestens 2 GPa und höchstens 6 GPa beträgt, und/oder

dessen auf die Fläche bezogenes elastisches Energieaufnahmevermögen in Maschinenrichtung mindestens 0,05 J/m$^2$ und höchstens 0,80 J/m$^2$, bevorzugt mindestens 0,10 J/m$^2$ und höchstens 0,60 J/m$^2$ beträgt, und/oder dessen auf das Volumen bezogenes elastisches Energieaufnahmevermögen in Maschinenrichtung mindestens 4 kJ/m$^3$ und höchstens 15 kJ/m$^3$, vorzugsweise mindestens 5 kJ/m$^3$ und höchstens 13 kJ/m$^3$ beträgt, wobei das auf die Fläche bzw. auf das Volumen bezogene elastische Energieaufnahmevermögen jeweils durch das in der Beschreibung angegebene Verfahren zu messen ist, und/oder dessen Zugfestigkeit gemäß ISO 1924-2:2008 in Maschinenrichtung, bezogen auf die Breite, mindestens 0,3 kN/m und höchstens 2,0 kN/m, bevorzugt mindestens 0,5 kN/m und höchstens 1,5 kN/m beträgt, und/oder dessen Zugfestigkeit gemäß ISO 1924-2:2008 in Maschinenrichtung, bezogen auf die Querschnittsfläche, mindestens 20 MPa und höchstens 60 MPa, bevorzugt mindestens 30 MPa und höchstens 50 MPa beträgt, und/oder dessen Bruchdehnung gemäß ISO 1924-2:2008 in Maschinenrichtung mindestens 0,5% und höchstens 5,0%, bevorzugt mindestens 1,0% und höchstens 4,0% beträgt, und/oder der unter Zugbelastung in Querrichtung gemäß ISO 1924-2:2008 seine 0,1%-Fließgrenze bei einer Dehnung von nicht weniger als 0,4% und nicht mehr als 2,0%, besonders bevorzugt von nicht weniger als 0,45% und nicht mehr als 1,0% erreicht, und/oder der unter Zugbelastung in Querrichtung gemäß ISO 1924-2:2008 seine 0,1%-Fließgrenze bei einer breitenbezogenen Zugspannung von mindestens 0,1 kN/m und höchstens 0,8 kN/m, bevorzugt von mindestens 0,15 kN/m und höchstens 0,6 kN/m erreicht, und/oder der unter Zugbelastung in Querrichtung gemäß ISO 1924-2:2008 seine 0,1%-Fließgrenze bei einer auf die Querschnittsfläche bezogenen Zugspannung von mindestens 8 MPa und höchstens 15 MPa, bevorzugt von mindestens 10 MPa und höchstens 13 MPa erreicht.

8. Separator nach einem der vorhergehenden Ansprüche, dessen Elastizitätsmodul in Querrichtung gemäß ISO 1924-2:2008 mindestens 1 GPa und höchstens 6 GPa, bevorzugt mindestens 1,5 GPa und höchstens 5 GPa beträgt, und/oder

dessen auf die Fläche bezogenes elastisches Energieaufnahmevermögen in Querrichtung mindestens 0,04 J/m$^2$ und höchstens 0,25 J/m$^2$, bevorzugt mindestens 0,05 J/m$^2$ und höchstens 0,20 J/m$^2$ beträgt, und/oder dessen auf das Volumen bezogenes elastisches Energieaufnahmevermögen in Querrichtung mindestens 1,5 kJ/m$^3$ und höchstens 5,0 kJ/m$^3$, vorzugsweise mindestens 2,0 kJ/m$^3$ und höchstens 4,0 kJ/m$^3$ beträgt, wobei das auf die Fläche bzw. auf das Volumen bezogene elastische Energieaufnahmevermögen jeweils durch das in der Beschreibung angegebene Verfahren zu messen ist, und/oder dessen Zugfestigkeit gemäß ISO 1924-2:2008 in Querrichtung, bezogen auf die Breite, mindestens 0,3 kN/m und höchstens 2,0 kN/m, bevorzugt mindestens 0,5 kN/m und höchstens 1,5 kN/m beträgt, und/oder dessen Zugfestigkeit gemäß ISO 1924-2:2008 in Querrichtung, bezogen auf die Querschnittsfläche, mindestens 20 MPa und höchstens 60 MPa, bevorzugt mindestens 30 MPa und höchstens 50 MPa beträgt, und/oder dessen Bruchdehnung gemäß ISO 1924-2:2008 in Querrichtung mindestens 1,0% und höchstens 8,0%, bevorzugt mindestens 2,0% und höchstens 7,0% beträgt, und/oder dessen Schrumpfung nach Aufheizen auf 150°C für 30 Minuten mindestens 0,4% und höchstens 1,2%, bevorzugt mindestens 0,45% und höchstens 1,0% beträgt, und/oder dessen Dicke, nach ISO 534:2011 an einem einzelnen Blatt bestimmt, mindestens 10 $\mu$m und höchstens 55 $\mu$m, bevorzugt mindestens 12 $\mu$m und höchstens 35 $\mu$m beträgt, und/oder dessen nach ISO 536:2019 bestimmtes Flächengewicht mindestens 8 g/m$^2$ und höchstens 30 g/m$^2$, bevorzugt mindestens 12 g/m$^2$ und höchstens 25 g/m$^2$ beträgt.

9. Separator nach einem der vorhergehenden Ansprüche, dessen Porosität $\mu$ mindestens 30% und höchstens 85%, bevorzugt mindestens 35% und höchstens 75% beträgt, wobei die Porosität $\mu$ gemäß

$$\mu = 1 - \frac{2}{3}\frac{m}{d}$$

zu berechnen ist, wobei m das Flächengewicht in g/m$^2$ und d die Dicke in $\mu$m ist und die Porosität als Wert zwischen 0 und 1 erhalten wird und durch Multiplikation mit 100 in einen Prozentsatz umgewandelt werden kann, und/oder

bei dem die mittlere Fließporengröße mindestens 40 nm und höchstens 1000 nm, bevorzugt mindestens 50 nm und höchstens 800 nm beträgt, und/oder

bei dem die Standardabweichung der mittleren Fließporengröße mindestens 3 nm und höchstens 300 nm, bevorzugt mindestens 3 nm und höchstens 200 nm beträgt, und/oder

dessen nach ISO 5636-5:2013 bestimmte Luftdurchlässigkeit nach Gurley mindestens 10 s und höchstens 450 s, bevorzugt mindestens 20 s und höchstens 300 s beträgt.

10. Elektrochemisches Element, welches zwei Elektroden, einen Elektrolyten und einen Separator nach einem der vorhergehenden Ansprüche umfasst, wobei das elektrochemische Element vorzugsweise durch einen Kondensator, einen Hybridkondensator, einen Superkondensator oder einen Akkumulator gebildet ist, wobei das elektrochemische Element besonders bevorzugt eine Lithium-Ionen-Batterie ist.

11. Verfahren zum Herstellen eines Separators, mit den folgenden Schritten:

   A - Herstellen einer Faserbahn umfassend Cellulosefasern,
   B - Kalandrieren der Faserbahn aus Schritt A,
   C - Aufrollen der den Separator bildenden Faserbahn,

   wobei die Menge und Art der Cellulosefasern in der Faserbahn in Schritt A so gewählt sind, dass mindestens 50% der Masse des Separators in Schritt C durch fibrillierte Fasern regenerierter Cellulose gebildet werden und einschließlich der fibrillierten Fasern regenerierter Cellulose mindestens 70% und höchstens 100% der Masse des Separators in Schritt C durch Cellulosefasern gebildet werden,
   wobei die Herstellung der Faserbahn in Schritt A oder das Kalandrieren der Faserbahn in Schritt B zumindest zum Teil bei einer Bahnspannung stattfindet, die mindestens 20% und höchstens 50% der breitenbezogenen Zugfestigkeit in Maschinenrichtung beträgt, die die Faserbahn direkt vor Schritt B aufweist und,
   wobei der in Schritt C erhaltene Separator unter Zugbelastung in Maschinenrichtung nach ISO 1924-2:2008 seine 0,1%-Fließgrenze bei einer Dehnung von nicht weniger als 0,5% und nicht mehr als 2,0% erreicht.

12. Verfahren nach Anspruch 11, bei dem eine Zugbelastung der Faserbahn in Maschinenrichtung zur Erzeugung der genannten Bahnspannung während zumindest eines Teils des Schritts A oder des Schritts B mindestens 25% und höchstens 40%, bevorzugt mindestens 25% und höchstens 35% der breitenbezogenen Zugfestigkeit der Faserbahn in Maschinenrichtung beträgt, die die Faserbahn direkt vor Schritt B aufweist, und/oder

   bei dem das Herstellen der Faserbahn in Schritt A in einer Papiermaschine erfolgt und die folgenden Schritte A.1 bis A.5 umfasst:

   A.1 - Bereitstellen einer wässrigen Suspension umfassend Cellulosefasern,
   A.2 - Fibrillieren zumindest eines Teils der Cellulosefasern in der Suspension,
   A.3 - Entwässern der Suspension auf einem umlaufenden Sieb zur Bildung einer Faserbahn,
   A.4 - Entwässern der Faserbahn durch mechanischen Druck
   A.5 - Trocknen der Faserbahn,

   wobei die Faserbahn vorzugswese der genannten Bahnspannung während Schritt A.5 in einer Trockenpartie oder während Schritt A.4 in einer Pressenpartie der Papiermaschine ausgesetzt wird.

13. Verfahren nach einem der Ansprüche 11 oder 12, bei dem die mittlere Feuchtigkeit der Faserbahn während einer Zugbelastung in Schritt A oder B zum Erzeugen der genannten Bahnspannung, die zwischen 20% und 50% der breitenbezogenen Zugfestigkeit in der Faserbahn direkt vor Schritt B in Maschinenrichtung beträgt, mindestens 4% und höchstens 15%, bevorzugt mindestens 5% und höchstens 12% beträgt, und/oder

   bei dem die mittlere Feuchtigkeit der Faserbahn während einer Zugbelastung in Schritt A oder B zum Erzeugen der genannten Bahnspannung, die zwischen 20% und 30% der breitenbezogenen Zugfestigkeit in der Faserbahn direkt vor Schritt B in Maschinenrichtung beträgt, mindestens 8% und höchstens 15% beträgt, und/oder
   bei dem die Faserbahn in Schritt B durch mindestens 2 und höchstens 14, bevorzugt durch mindestens 3 und höchstens 10 Walzspalte geführt wird, wobei ein mechanischer Druck in allen oder zumindest einem Teil der Walzspalte in Schritt B mindestens 80 kN/m und höchstens 400 kN/m, bevorzugt mindestens 160 kN/m und höchstens 320 kN/m beträgt.

**14.** Verfahren nach einem der Ansprüche 11 bis 13, bei dem das Kalandrieren in Schritt B mithilfe einer Mehrzahl von Walzen durchgeführt wird, wobei die mittlere Temperatur aller oder eines Teils dieser Walzen in Schritt B mindestens 25°C und höchstens 140°C, vorzugsweise mindestens 50°C und höchstens 140°C, besonders bevorzugt mindestens 80°C und höchstens 140°C beträgt, und/oder

bei dem die Menge und Zusammensetzung der Cellulosefasern in Schritt A so gewählt wird, dass der Separator in Schritt C zu mindestens 55% und höchstens 100%, vorzugsweise zu mindestens 60% und höchstens 95% seiner Masse durch fibrillierte Fasern regenerierter Cellulose gebildet wird.

**15.** Verfahren nach einem der Ansprüche 11 bis 14, bei dem die fibrillierten Fasern regenerierter Cellulose in einem Lösungsmittel gesponnene Fasern ("*solvent-spun*") regenerierter Cellulose sind, und insbesondere durch Lyocell$^{®}$ Fasern gebildet werden, und/oder

bei dem mittlere lineare Dichte der fibrillierten Fasern regenerierter Cellulose vor dem Fibrillieren mindestens 0,8 g/10000 m (0,8 dtex) und höchstens 3,0 g/10000 m (3,0 dtex) und bevorzugt mindestens 1,0 g/10000 m (1,0 dtex) und höchstens 2,5 g/10000 m (2,5 dtex) beträgt, und/oder bei dem die Länge der fibrillierten Fasern regenerierter Cellulose vor dem Fibrillieren mindestens 2 mm und höchstens 8 mm und bevorzugt mindestens 3 mm und höchstens 6 mm beträgt, und/oder
bei dem der Separator in Schritt C einen Anteil an Cellulosefasern, inklusive der fibrillierten Fasern regenerierter Cellulose, von mindestens 75% und höchstens 95% bezogen auf die Masse des Separators aufweist, und/oder
bei dem der Separator in Schritt C ein Separator nach einem der Ansprüche 1 bis 9 ist.

**Claims**

**1.** Separator for an electrochemical element, in which at least 50% of the mass of the separator is formed by fibrillated regenerated cellulose fibers wherein, including the fibrillated regenerated cellulose fibers, at least 70% and at most 100% of the mass of the separator is formed by cellulose fibers, wherein the separator is calendered, and wherein under tensile load in the machine direction in accordance with ISO 1924-2:2008, the separator reaches its 0.1% yield point at an elongation of no less than 0.5% and no more than 2.0%.

**2.** Separator according to claim 1, in which the proportion of fibrillated regenerated cellulose fibers is at least 55% and at most 100%, preferably at least 60% and at most 95% of the mass of the separator, and/or

in which the fibrillated regenerated cellulose fibers are formed by solvent-spun regenerated cellulose fibers, preferably by Lyocell$^{®}$ fibers, and/or
in which the mean linear density of the fibrillated regenerated cellulose fibers before fibrillation is at least 0.8 g/10000 m (0.8 dtex) and at most 3.0 g/10000 m (3.0 dtex), preferably at least 1.0 g/10000 m (1.0 dtex) and at most 2.5 g/10000 m (2.5 dtex).

**3.** Separator according to one of the preceding claims, in which the mean length of the fibrillated regenerated cellulose fibers before fibrillation is at least 2 mm and at most 8 mm, preferably at least 3 mm and at most 6 mm, and/or

in which the proportion of cellulose fibers, including the fibrillated regenerated cellulose fibers, is at least 75% and at most 95% with respect to the mass of the separator, and/or
in which, in addition to the fibrillated regenerated cellulose fibers, said cellulose fibers also contain non-fibrillated regenerated cellulose fibers, pulp fibers, or mixtures thereof,
wherein the cellulose fibers preferably are a mixture of regenerated cellulose fibers or pulp fibers, wherein in all cases, the regenerated cellulose fibers contain fibrillated and optionally non-fibrillated regenerated cellulose fibers, and wherein the ratio of the masses of regenerated cellulose fibers to pulp fibers is at least 1:1 and at most 30:1, preferably at least 2:1 and at most 20:1, under the condition that at least 50% of the mass of the separator is formed by fibrillated regenerated cellulose fibers and the cellulose fibers in the separator in total make up at least 70% and at most 100% of the mass of the separator.

**4.** Separator according to one of the preceding claims, in which the pulp fibers are at least in part micro-fibrillated pulp fibers, nano-fibrillated pulp fibers or pulp fibers with a length-weighted mean length of at most 0.2 mm, preferably at most 0.15 mm, and/or

which, in addition to the cellulose fibers, also contains fibers from cellulose derivatives, glass fibers, or plastic fibers, wherein the plastic fibers are preferably formed by polyolefins, in particular polyethylene or polypropylene; by polyesters, in particular polyethylene terephthalate or polylactic acids; by polyarylates in particular poly(4-hydroxybenzoic acid-co-6-hydroxy-2-naphthoic acid); by polyethers, polysulfones, polyurethanes, polyamides, by aromatic polyamides, in particular poly(p-phenylene terephthalamide); by polyimides, polyvinyl alcohol, polyacrylates in particular polyacrylonitrile or poly(acrylonitrile-co-methyl acrylate); by polyphenylene sulfide or by poly(ethylene-co-vinyl acetate), wherein

the proportion of fibers other than cellulose fibers in total is preferably at most 30%, particularly preferably at most 20% of the mass of the separator.

5. Separator according to one of the preceding claims, which further contains one or more of the following substances or components: polyvinyl alcohol, polyethylene glycol, polyvinylidene fluoride, guaran, starch, carboxymethyl cellulose, methyl cellulose, dialdehydes, in particular glyoxal, or one or more inorganic fillers, in particular kaolin, titanium dioxide ($TiO_2$), silicon dioxide ($SiO_2$), aluminum oxide ($Al_2O_3$), zirconium dioxide ($ZrO_2$) or calcium carbonate ($CaCO_3$), wherein

the amount of inorganic fillers is preferably at most 30%, particularly preferably at most 20% and particularly preferably at most 15% of the mass of the separator.

6. Separator according to one of the preceding claims which, under tensile load in the machine direction in accordance with ISO 1924-2:2008, reaches its 0.1% yield point at an elongation of no less than 0.55% and no more than 2.0% and preferably no less than 0.6% and no more than 1.0%, and/or

which, under tensile load in the machine direction in accordance with ISO 1924-2:2008, reaches its 0.1% yield point at a width-related tensile stress of at least 0.1 kN/m and at most 2.0 kN/m, preferably at least 0.15 kN/m and at most 1.6 kN/m. and/or
which, under tensile load in the machine direction in accordance with ISO 1924-2:2008, reaches its 0.1% yield point at a tensile stress with respect to cross-sectional area of at least 15 MPa and at most 30 MPa, preferably at least 18 MPa and at most 28 MPa.

7. Separator according to one of the preceding claims, with a Young's modulus in the machine direction in accordance with ISO 1924-2:2008 of at least 1 GPa and at most 8 GPa, preferably at least 2 GPa and at most 6 GPa, and/or

with an elastic energy absorption with respect to area in the machine direction of at least 0.05 $J/m^2$ and at most 0.80 $J/m^2$, preferably at least 0.10 $J/m^2$ and at most 0.60 $J/m^2$, and/or
with an elastic energy absorption with respect to volume in the machine direction of at least 4 $kJ/m^3$ and at most 15 $kJ/m^3$, preferably at least 5 $kJ/m^3$ and at most 13 $kJ/m^3$, wherein the elastic energy absorption with respect to area or volume, respectively, is to be measured by the corresponding method described in the description, and/or
with a width-related tensile strength in the machine direction in accordance with ISO 1924-2:2008 of at least 0.3 kN/m and at most 2.0 kN/m, preferably at least 0.5 kN/m and at most 1.5 kN/m, and/or
with a tensile strength with respect to the cross-sectional area in the machine direction in accordance with ISO 1924-2:2008 of at least 20 MPa and at most 60 MPa, preferably at least 30 MPa and at most 50 MPa, and/or
with an elongation at break in the machine direction in accordance with ISO 1924-2:2008 of at least 0.5% and at most 5.0%, preferably at least 1.0% and at most 4.0%, and/or
which, under tensile load in the cross direction in accordance with ISO 1924-2:2008, reaches its 0.1% yield point at an elongation of no less than 0.4% and no more than 2.0%, particularly preferably no less than 0.45% and no more than 1.0%, and/or
which, under tensile load in the cross direction in accordance with ISO 1924-2:2008, reaches its 0.1% yield point at a width-related tensile stress of at least 0.1 kN/m and at most 0.8 kN/m, preferably at least 0.15 kN/m and at most 0.6 kN/m, and/or
which, under tensile load in the cross direction in accordance with ISO 1924-2:2008, reaches its 0.1% yield point at a tensile stress with respect to cross-sectional area of at least 8 MPa and at most 15 MPa, preferably at least 10 MPa and at most 13 MPa.

8. Separator according to one of the preceding claims, with a Young's modulus in the cross direction in accordance with ISO 1924-2:2008 of at least 1 GPa and at most 6 GPa, preferably at least 1.5 GPa and most 5 GPa, and/or

with an elastic energy absorption with respect to area in the cross direction of at least 0.04 $J/m^2$ and at most 0.25 $J/m^2$, preferably at least 0.05 $J/m^2$ and at most 0.20 $J/m^2$, and/or
with an elastic energy absorption with respect to volume in the cross direction of at least 1.5 $kJ/m^3$ and at most 5.0

$kJ/m^3$, preferably at least 2.0 $kJ/m^3$ and at most 4.0 $kJ/m^3$, wherein the elastic energy absorption with respect to area or volume, respectively, is to be measured by the corresponding method described in the description, and/or with a width-related tensile strength in the cross direction in accordance with ISO 1924-2:2008 of at least 0.3 kN/m and at most 2.0 kN/m, preferably at least 0.5 kN/m and at most 1.5 kN/m, and/or

with a tensile strength with respect to cross-sectional area in the cross direction in accordance with ISO 1924-2:2008 of at least 20 MPa and at most 60 MPa, preferably at least 30 MPa and at most 50 MPa, and/or with an elongation at break in the cross direction in accordance with ISO 1924-2:2008 of at least 1.0% and at most 8.0%, preferably at least 2.0% and at most 7.0%, and/or

with a shrinkage after heating to 150°C for 30 minutes of at least 0.4% and at most 1.2%, preferably at least 0.45% and at most 1.0%, and/or

with a thickness, determined on a single sheet in accordance with ISO 534:2011, of at least 10 $\mu$m and at most 55 $\mu$m, preferably at least 12 $\mu$m and at most 35 $\mu$m, and/or

with a basis weight in accordance with ISO 536:2019 of at least 8 $g/m^2$ and at most 30 $g/m^2$, preferably at least 12 $g/m^2$ and at most 25 $g/m^2$.

9. Separator according to one of the preceding claims, with a porosity $\mu$ of at least 30% and at most 85%, preferably at least 35% and at most 75%, wherein the porosity $\mu$ is calculated according to

$$\mu = 1 - \frac{2}{3}\frac{m}{d},$$

wherein m is the basis weight in $g/m^2$ and d is the thickness in $\mu$m and the porosity is obtained as a value between 0 and 1 and is converted into a percentage by multiplication by 100, and/or

in which the mean flow pore size is at least 40 nm and at most 1000 nm, preferably at least 50 nm and at most 800 nm, and/or

in which the standard deviation of the mean flow pore size is at least 3 nm and at most 300 nm, preferably at least 3 nm and at most 200 nm, and/or

with a Gurley air permeability determined in accordance with ISO 5636-5:2013 of at least 10 s and at most 450 s, preferably at least 20 s and at most 300 s.

10. Electrochemical element, which comprises two electrodes, an electrolyte and a separator according to one of the preceding claims, wherein the electrochemical element is preferably formed by a capacitor, a hybrid capacitor, a super capacitor or an accumulator, wherein the electrochemical element is particularly preferably a lithium ion battery.

11. Process for manufacturing a separator, with the following steps:

A - manufacturing a fibrous web comprising cellulose fibers,
B - calendering the fibrous web from step A,
C - rolling up the fibrous web forming the separator,

wherein the amount and type of cellulose fibers in the fibrous web in step A is selected such that at least 50% of the mass of the separator in step C is formed by fibrillated regenerated cellulose fibers and, including the fibrillated regenerated cellulose fibers, at least 70% and at most 100% of the mass of the separator in step C is formed by cellulose fibers, wherein the manufacture of the fibrous web in step A or the calendering of the fibrous web in step B is carried out at least in part at a web tension which is at least 20% and at most 50% of the width-related tensile strength in the machine direction that the fibrous web has directly before step B, and wherein, under tensile load in the machine direction in accordance with ISO 1924-2:2008, the separator obtained in step C reaches its 0.1% yield point at an elongation of no less than 0.5% and no more than 2.0%.

12. Process according to claim 11, in which a tensile load of the fibrous web in the machine direction for generating said web tension during at least a part of step A or step B is at least 25% and at most 40%, preferably at least 25% and at most 35% of the width-related tensile strength of the fibrous web in the machine direction that the fibrous web has directly before step B, and/or

in which the manufacture of the fibrous web in step A is carried out in a paper machine and comprises the following steps A.1 to A.5:

A.1 - providing an aqueous suspension comprising cellulose fibers,
A.2 - fibrillating at least a part of the cellulose fibers in the suspension,
A.3 - de-watering the suspension on a running wire to form a fibrous web,
A.4 - de-watering the fibrous web by mechanical pressure,
A.5 - drying the fibrous web,

wherein the fibrous web preferably is exposed to said web tension during step A.5 in a drying section or during step A.4 in a press section of the paper machine.

13. Process according to one of claims 11 or 12, in which the mean moisture content of the fibrous web under a tensile load in step A or B to generate said web tension, which is between 20% and 50% of the width-related tensile strength of the fibrous web in the machine direction directly before step B, is at least 4% and at most 15%, preferably at least 5% and at most 12%, and/or

in which the mean moisture content of the fibrous web under a tensile load in step A or B to generate said web tension, which is between 20% and 30% of the width-related tensile strength of the fibrous web in the machine direction directly before step B, is at least 8% and at most 15%, and/or
in which the fibrous web in step B passes through at least 2 and at most 14, preferably at least 3 and at most 10 nips, wherein a mechanical pressure in all or at least a part of the nips in step B is at least 80 kN/m and at most 400 kN/m, preferably at least 160 kN/m and at most 320 kN/m.

14. Process according to one of claims 11 to 13, in which the calendering in step B is carried out by means of a plurality of rolls, wherein the mean temperature of all or a part of these rolls in step B is at least 25°C and at most 140°C, preferably at least 50°C and at most 140°C, particularly preferably at least 80°C and at most 140°C, and/or
in which the amount and composition of the cellulose fibers in step A is selected such that the separator in step C is formed by at least 55% and at most 100%, preferably at least 60% and at most 95% of its mass by fibrillated regenerated cellulose fibers.

15. Process according to one of claims 11 to 14, in which the fibrillated regenerated cellulose fibers are formed by solvent-spun regenerated cellulose fibers, and in particular by Lyocell® fibers, and/or

in which the mean linear density of the fibrillated regenerated cellulose fibers before fibrillation is at least 0.8 g/10000 m (0.8 dtex) and at most 3.0 g/10000 m (3.0 dtex) and preferably at least 1.0 g/10000 m (1.0 dtex) and at most 2.5 g/10000 m (2.5 dtex), and/or wherein the length of the fibrillated regenerated cellulose fibers before fibrillation is at least 2 mm and at most 8 mm and preferably at least 3 mm and at most 6 mm, and/or
in which the separator in step C has a proportion of cellulose fibers, including the fibrillated regenerated cellulose fibers, of at least 75% and at most 95% with respect to the mass of the separator, and/or
in which the separator in step C is a separator according to one of claims 1 to 9.

**Revendications**

1. Séparateur pour éléments électrochimiques, dans lequel

au moins 50 % de la masse du séparateur est constituée de fibres fibrillées de cellulose régénérée,
dans lequel, y compris les fibres fibrillées de cellulose régénérée, au moins 70% et au maximum 100 % de la masse du séparateur est constituée de fibres de cellulose,
dans lequel le séparateur est calandré et
dans lequel le séparateur atteint, sous contrainte de traction dans la direction de la machine, selon ISO 1924-2:2008 0,1 % de sa limite élastique lors d'une dilatation non inférieure à 0,5 % et non supérieure à 20 %.

2. Séparateur selon la revendication 1, dans lequel la part de fibres fibrillées de cellulose régénérée représente au moins 55 % et au maximum 100 %, de préférence au moins 60 % et au maximum 95 % de la masse du séparateur et/ou

dans lequel les fibres fibrillées de cellulose régénérée sont constituées de fibres de cellulose régénérée tissées dans un solvant, de préférence de fibres Lyocell ® et/ou
dans lequel la densité linéaire moyenne des fibres fibrillées de cellulose régénérée avant la fibrillation est égale à au moins 0,8 g/10000 m (0,8 dtex) et au maximum 3,0 g/10000 m (3,0 dtex), de préférence au moins 1,0 g/10000 m (1,0 dtex) et au maximum 2,5 g/10000 m (2,5 dtex).

3. Séparateur selon l'une des revendications précédentes, dans lequel la longueur moyenne des fibres fibrillées de cellulose régénérée avant la fibrillation est égale à au moins 2 mm et au maximum 8 mm, de préférence au moins 3 mm et au maximum 6 mm et/ou

dans lequel la part de fibres de cellulose, y compris les fibres fibrillées de cellulose régénérée représente au moins 75 % et au maximum 95 % par rapport à la masse du séparateur et/ou
dans lequel les fibres de cellulose mentionnées contiennent, en plus des fibres fibrillées de cellulose régénérée, également des fibres non fibrillées de cellulose régénérée, des fibres de cellulose ou des mélanges de celles-ci, dans lequel les fibres de cellulose sont de préférence un mélange de fibres de cellulose régénérée et des fibres de cellulose,
dans lequel les fibres de cellulose régénérée contiennent dans tous les cas des fibres fibrillées et, en option, non fibrillées de cellulose régénérée,
et dans lequel le rapport entre les masses de fibres de cellulose régénérée et de fibres de cellulose représente au moins 1:1 et au maximum 30:1 de préférence au moins 2:1 et au maximum 20:1, à la condition qu'au moins 50 % de la masse du séparateur soient constitués de fibres fibrillées de cellulose régénérée et que les fibres de cellulose dans le séparateur constituent au total au moins 70 % et au maximum 100 % de la masse du séparateur.

4. Séparateur selon l'une des revendications précédentes, dans lequel les fibres de cellulose sont au moins en partie des fibres de cellulose micro-fibrillées, des fibres de cellulose nano-fibrillées ou des fibres de cellulose avec une longueur pondérée moyenne de maximum 0,2 mm, de préférence de maximum 0,15 mm et/ou qui contient, en plus des fibres de cellulose, également des fibres de dérives de cellulose, des fibres de verre ou des fibres de matière plastique, dans lequel les fibres de matière plastique sont constituées de préférence de polyoléfines, plus particulièrement du polyéthylène ou du polypropylène; de polyester, plus particulièrement du polyéthylènetéréphtalate ou des acides polylactiques ; de polyarylates, plus particulièrement du poly-(acide 4-hydroxybenzoïque-co-6-hydroxy-acide 2-napthoïque) ; de polyéther, de polysulfone, de polyuréthane, de polyamides, de polyamides aromatiques, plus particulièrement du poly-(p-phénylènetéréphtalamide) ; de polyimides, d'alcool polyvinylique, de polyacrylates, plus particulièrement du polyacrylnitrile ou du poly-(acrylonitrile-co-méthylacrylate) ; de sulfure de polyphényle ou de poly-(éthylène-co-vinylacétate), dans lequel la part d'autres fibres que les fibres de cellulose représente, au total, de préférence, au maximum 30 %, plus particulièrement de préférence au maximum 20 % de la masse du séparateur.

5. Séparateur selon l'une des revendications précédentes, qui comprend en outre une ou plusieurs des substances ou des composants suivants : alcool polyvinylique, polyéthylène glycol, fluorure de polyvinylidène, gomme de guar, amidon, carboxyméthylcellulose, méthylcellulose, dialdéhyde, plus particulièrement le glyoxal, ou un ou plusieurs charges inorganiques, plus particulièrement le kaolin, le dioxyde de titane ($TiO_2$), le dioxyde de silicium ($SiO_2$), l'oxyde d'aluminium ($Al_2O_3$), le dioxyde de ziconium ($ZrO_2$) ou le carbonate de calcium ($CaCO_3$), dans lequel la quantité de charges inorganiques représente de préférence au maximum 30 %, plus particulièrement de préférence au maximum 20 % et plus particulièrement de préférence au maximum 15 % de la masse du séparateur.

6. Séparateur selon l'une des revendications précédentes, qui, sous contrainte de traction dans la direction de la machine, selon ISO 1924-2:2008, atteint sa limite élastique de 0,1 % avec une dilatation non inférieure à 0,55 % et non supérieure à 2,0 % et de préférence non inférieure à 0,6 % et non supérieure à 1,0 % et/ou

qui, sous contrainte de traction dans la direction de la machine, selon ISO 1924-2:2008, atteint sa limite élastique de 0,1 % lors d'une contrainte de traction rapportée à la largeur d'au moins 0,1 kN/m et de maximum 2,0 kN/m, de préférence d'au moins 0,15 kN/m et de maximum 1,6 kN/m et/ou
qui, sous contrainte de traction dans la direction de la machine, selon ISO 1924-2:2008, atteint sa limite élastique de 0,1 % lors d'une contrainte de traction rapportée à la surface de section transversale d'au moins 15 MPa et de maximum 30 MPa, de préférence d'au moins 18 MPa et de maximum 28 MPa.

7. Séparateur selon l'une des revendications précédentes, dont le module d'élasticité dans la direction de la machine, selon ISO 1924-2:2008, est égal à au moins 1 GPa et au maximum 8 GPa, de préférence au moins 2 GPa et au maximum 6 GPa et/ou

dont la capacité d'absorption d'énergie élastique rapportée à la surface dans la direction de la machine est égale à au moins 0,05 kJ/m² et au maximum 0,80 kJ/m² de préférence au moins 0,10 kJ/m² et au maximum 0,60 kJ/m²,

dont la capacité d'absorption d'énergie élastique rapportée au volume dans la direction de la machine est égale à au moins 4 kJ/m$^3$ et au maximum 15 kJ/m$^3$, de préférence au moins 5 kJ/m$^3$ et au maximum 13 kJ/m$^3$, dans lequel la capacité d'absorption d'énergie élastique rapportée à la surface ou au volume doit être mesurée respectivement à l'aide du procédé indiqué dans la description et/ou

dont la résistance à la traction selon ISO 1924-2:2008 dans la direction de la machine, rapportée à la largeur, est égale à au moins 0,3 kN/m et maximum 2,0 kN/m, de préférence au moins 0,5 kN/m et maximum 1,5 kN/m et/ou dont la résistance à la traction selon ISO 1924-2:2008 dans la direction de la machine, rapportée à la surface de section transversale est égale à au moins 20 MPa et au maximum 60 MPa, de préférence au moins 30 MPa et au maximum 50 MPa et/ou

dont l'allongement à la rupture selon ISO 1924-2:2008 dans la direction de la machine est d'au moins 0,5 % et de maximum 5,0 %, de préférence d'au moins 1,0 % et de maximum 4,0 % et/ou

qui, sous contrainte de traction dans la direction transversale selon ISO 1924-2:2008, atteint sa limite élastique de 0,1 % lors d'un allongement non inférieur à 0,4 % et non supérieur à 2,0 %, plus particulièrement de préférence non inférieur à 0,45 % et non supérieur à 1,0 % et/ou

qui, sous contrainte de traction dans la direction transversale selon ISO 1924-2:2008, atteint sa limite élastique de 0,1 % lors d'une contrainte de traction rapportée à la largeur d'au moins 0,1 kN/m et de maximum 0,8 kN/m, de préférence d'au moins 0,15 kN/m et de maximum 0,6 kN/m et/ou

qui, sous contrainte de traction dans la direction transversale selon ISO 1924-2:2008, atteint sa limite élastique de 0,1 % lors d'une contrainte de traction rapportée à la surface de section transversale d'au moins 8 MPa et de maximum 15 MPa, de préférence d'au moins 10 MPa et de maximum 13 MPa.

8. Séparateur selon l'une des revendications précédentes, dont le module d'élasticité dans la direction transversale, selon ISO 1924-2:2008, est égal à au moins 1 GPa et au maximum 6 GPa, de préférence au moins 1,5 GPa et au maximum 5 GPa et/ou

dont la capacité d'absorption d'énergie élastique rapportée à la surface dans la direction de la machine est égale à au moins 0,04 kJ/m$^2$ et au maximum 0,25 kJ/m$^2$ de préférence au moins 0,05 kJ/m$^2$ et au maximum 0,20 kJ/m$^2$, dont la capacité d'absorption d'énergie élastique rapportée au volume dans la direction transversale est égale à au moins 1,5 kJ/m$^3$ et au maximum 5,0 kJ/m$^3$, de préférence au moins 2,0 kJ/m$^3$ et au maximum 4,0 kJ/m$^3$, dans lequel la capacité d'absorption d'énergie élastique rapportée à la surface ou au volume doit être mesurée respectivement à l'aide du procédé indiqué dans la description et/ou

dont la résistance à la traction selon ISO 1924-2:2008 dans la direction transversale, rapportée à la largeur, est égale à au moins 0,3 kN/m et maximum 2,0 kN/m, de préférence au moins 0,5 kN/m et maximum 1,5 kN/m et/ou dont la résistance à la traction selon ISO 1924-2:2008 dans la direction transversale, rapportée à la surface de section transversale est égale à au moins 20 MPa et au maximum 60 MPa, de préférence au moins 30 MPa et au maximum 50 MPa et/ou

dont l'allongement à la rupture selon ISO 1924-2:2008 dans la direction transversale est d'au moins 1,0 % et de maximum 8,0 %, de préférence d'au moins 2,0 % et de maximum 7,0 % et/ou

dont le retrait après chauffage à 150 °C pendant 30 minutes est d'au moins 0,4 % et de maximum 1,2 %, de préférence d'au moins 0,45 % et de maximum 1,0 % et/ou

dont l'épaisseur, déterminée selon ISO 534:2011 sur une seule feuille, est égale à au moins 10 $\mu$m et au maximum 55 $\mu$m, de préférence au moins 12 $\mu$m et au maximum 35 $\mu$m et/ou

dont le poids surfacique déterminé selon ISO 536:2019 est égal à au moins 8 g/m$^2$ au maximum 30 g/m$^2$, de préférence au moins 12 g/m$^2$ et au maximum 25 g/m$^2$.

9. Séparateur selon l'une des revendications précédentes, dont la porosité $\mu$ est égale à au moins 30 % et au maximum 85 %, de préférence au moins 35 % et au maximum 75 %, dans lequel la porosité $\mu$ est calculée selon :

$$\mu = 1 - (2/3 \, ^* \, m/d)$$

m étant le poids surfacique en g/m$^2$ et d étant l'épaisseur en $\mu$m et la porosité est une valeur entre 0 et 1 et peut être convertie en un pourcentage par une multiplication par 100 et/ou

dans lequel la taille de pores moyenne est égale à au moins 40 nm et au maximum 1000 nm, de préférence au moins 50 nm et au maximum 800 nm t/ou

dans lequel l'écart standard de la taille de pores moyenne est égale à au moins 3 nm et au maximum 300 nm, de préférence au moins 3 nm et au maximum 200 nm et/ou dont la perméabilité à l'air, déterminée selon ISO 5636-5:2013 selon Gurley, est égale à au moins 10 s et au maximum 450 s, de préférence au moins 20 s et au maximum 300 s.

10. Élément électrochimique qui comprend deux électrodes, un électrolyte et un séparateur selon l'une des revendications précédentes, dans lequel l'élément électrochimique est constitué de préférence d'un condensateur, d'un condensateur hybride, d'un super-condensateur ou d'un accumulateur, dans lequel l'élément électrochimique est plus particulièrement de préférence une batterie lithium-ion.

11. Procédé de fabrication d'un séparateur avec les étapes suivantes :

A - Fabrication d'une bande de fibres comprenant des fibres de cellulose,
B - Calandrage de la bande de fibres de l'étape A,
C - Roulage de la bande de fibres constituant le séparateur,
dans lequel la quantité et le type des fibres de cellulose dans la bande de fibres de l'étape A est choisi de sorte qu'au moins 50 % de la masse du séparateur à l'étape C sont constitués de fibres fibrillées de cellulose régénérée et, y compris les fibres fibrillées de cellulose régénérée, au moins 70 % et au maximum 100 % de la masse du séparateur de l'étape C sont constitués de fibres de cellulose,
dans lequel la fabrication de la bande de fibres de l'étape A ou le calandrage de la bande de fibres à l'étape B a lieu au moins en partie avec une tension de la bande qui représente au moins 20 % et au maximum 50 % de la résistance à la traction rapportée à la largeur dans la direction de la machine, que présente la bande de fibres immédiatement avant l'étape B et
dans lequel le séparateur obtenu à l'étape C, sous contrainte de traction dans la direction de la machine, selon ISO 1924-2:2008, sa limite élastique de 0,1 % avec un allongement non inférieur à 0,5 % et non supérieur à 2,0 %.

12. Procédé selon la revendication 11, dans lequel une sollicitation en traction de la bande de fibres dans la direction de la machine afin de générer la tension de bande mentionnées pendant au moins une partie de l'étape A ou de l'étape B représente au moins 25% et au maximum 40 %, de préférence au moins 25% et au maximum 35 % de la résistance à la traction rapportée à la largeur de la bande de fibres dans la direction de la machine, que présente la bande de fibres immédiatement avant l'étape B et/ou

dans lequel la fabrication de la bande de fibres à l'étape A a lieu dans une machine à papier et comprend les étapes suivantes A.1 à A.5 :

A.1 - mise à disposition d'une suspension aqueuse comprenant des fibres de cellulose,
A.2 - fibrillation d'au moins une partie des fibres de cellulose dans la suspension,
A.3 - déshydratation de la suspension sur un tamis rotatif afin de former une bande de fibres
A.4 - déshydratation de la bande de fibres par pression mécanique
A.5 - séchage de la bande de fibres,

dans lequel la bande de fibres est soumise de préférence à la tension de bande mentionnée pendant l'étape A.5 dans une partie de séchage ou pendant l'étape A.4 dans une partie de pressage de la machine à papier.

13. Procédé selon l'une des revendications 11 ou 12, dans lequel l'humidité moyenne de la bande de fibres pendant une sollicitation en traction à l'étape A ou B afin de générer la tension de bande mentionnée, qui représente entre 20 % et 50 % de la résistance à la traction rapportée à la largeur das la bande de fibres immédiatement avant l'étape B dans la direction de la machine, représente au moins 4 % et au maximum 15 %, de préférence au moins 5 % et au maximum 12 % et/ou

dans lequel l'humidité moyenne de la bande de fibres pendant une sollicitation en traction à l'étape A ou B afin de générer la tension de bande mentionnée, qui représente entre 20 % et 30 % de la résistance à la traction rapportée à la largeur dans la bande de fibres immédiatement avant l'étape B dans la direction de la machine, représente au moins 8 % et au maximum 15 % et/ou
dans lequel la bande de fibres de l'étape B est conduite à travers au moins 2 et au maximum 14, de préférence à travers au moins 3 et au maximum 10 fentes de laminage, dans lequel une pression mécanique dans toutes ou une partie des fentes de laminage dans l'étape A est égale à au moins 80 kN/m et au maximum 400 kN/m, de préférence au moins 160 kN/m et au maximum 320 kN/m.

14. Procédé selon l'une des revendications 11 à 13, dans lequel le calandrage de l'étape B est effectué au moyen d'une pluralité de rouleaux, dans lequel la température moyenne de tous ou d'une partie de ces rouleaux de l'étape B est égale à au moins 25 °C et au maximum 140 °C, de préférence au moins 50 °C et au maximum 140 °C, plus particulièrement de préférence au moins 80 °C et au maximum 140 °C et/ou

dans lequel la quantité et la composition des fibres de cellulose de l'étape A sont choisies de sorte que le séparateur de l'étape C est constitué, à hauteur d'au moins 55 % et de maximum 100 %, de préférence d'au moins 60 % et de maximum 95 % de sa masse, de fibres fibrillées de cellulose régénérée.

15. Procédé selon l'une des revendications 11 à 14, dans lequel les fibres fibrillées de cellulose régénérée sont des fibres, tissées dans un solvant (« solvent-spun ») de cellulose régénérée et plus particulièrement sont constituées de fibres Lyocell® et/ou dans lequel la densité linéaire moyenne des fibres fibrillées de cellulose régénérée avant fibrillation est égale à au moins 0,8 g/10000 m (0,8 dtex) et au maximum 3,0 g/10000 m (3,0 dtex) et de préférence au moins 1,0 g/10000 m (1,0 dtex) et au maximum 2,5 g/10000 m (2,5 dtex) et/ou dans lequel la longueur des fibres fibrillées de cellulose régénérée avant la fibrillation est égale à au moins 2 mm et au maximum 8 mm et de préférence au moins 3 mm et au maximum 6 mm et/ou

dans lequel le séparateur de l'étape C présente une part de fibres de cellulose, y compris les fibres fibrillées de cellulose régénérée, d'au moins 75 % et de maximum 95 %, rapporté à la masse du séparateur et/ou

dans lequel le séparateur de l'étape C est un séparateur selon l'une des revendications 1 à 9.

Fig. 1

Fig.2

Fig. 3